# EUROPEAN PATENT SPECIFICATION

(11) **EP 4 271 235 B1**
(45) Date of publication and mention of the grant of the patent: **07.10.2026**
(21) Application number: 21916256.7
(22) Date of filing: 22.12.2021
(51) Int. Cl.: A47J 37/06, A47J 27/04

(54) **COOKING SYSTEM WITH STEAM**
KOCHSYSTEM MIT DAMPF
SYSTÈME DE CUISSON AVEC VAPEUR

(30) Priority: 31.12.2020 US 202063132749 P; 31.12.2020 US 202063132747 P
(43) Date of publication of application: 08.11.2023
(73) Proprietor: SharkNinja Operating LLC, Needham, MA 02494 (US)
(72) Inventor: MARTIN, Christopher T., Concord, MA 01742 (US); ANTHONY, Joshua D., Billerica, MA 01862 (US); SHARP, Benjamin, Cumbria CA130AX (GB); LI, Chuwen, Suzhou City, Jiangsu Province (CN)
(74) Representative: Kilburn & Strode LLP
(86) International application number: PCT/US2021/064862
(87) International publication number: WO 2022/146826

(56) References cited:
- WO-A1-2020/148261
- WO-A1-2020/148261
- CN-A- 107 822 524
- CN-A- 110 279 317
- CN-A- 111 543 865
- JP-A- 2011 217 933
- US-A1- 2017 245 683
- US-A1- 2017 245 683

## Description

### TECHNICAL FIELD

Embodiments of the present disclosure relate generally to a cooking system, and more particularly, to a cooking system capable of controlling a humidity of the cooking environment during operation of the cooking system.

### BACKGROUND

Air fryers are growing in popularity because they cook very quickly and provide crispy results. They are limited in versatility partly due to the hot, dry environment that they create; while air fryers provide fast cook times and browned foods, air fryers also dry food out very quickly. This is particularly a problem for leaner meats, frozen meats, and roasted vegetables, all of which rely heavily on retained moisture to provide a desirable result.

WO 2020/148261 A1 teaches a cooking oven having a water guiding apparatus with a heating element for generating steam. US 2017/245683 A1 and CN 111543865 A teach air fryers having steam generators.

### SUMMARY

In accordance with the present invention there is provided a cooking system as defined in claim 1. The dependent claims define optional features.

According to an embodiment, a cooking system for cooking food including a housing having a hollow interior and a cooking container receivable within said hollow interior. The cooking container has an upper end and a feature formed at the upper end. At least one heating element is associated with the feature and a fluid source is arranged to deliver fluid to said feature.

Said feature includes a volume for holding said fluid.

Said upper end of said cooking container has a radially extending flange, and said feature is formed in said radially extending flange.

Said feature includes a depression formed in said flange.

Optionally, said fluid source is a reservoir removably mounted to said lid.

Optionally, said at least one heating element is mounted within said housing.

Optionally, said housing has a sidewall and said at least one heating element is mounted within a cavity formed in said sidewall.

Optionally, when said cooking container is arranged within said hollow interior, said feature is arranged within said cavity adjacent said at least one heating element.

Optionally, a portion of said feature is arranged in direct contact with said at least one heating element.

Optionally, a biasing mechanism is operably coupled to said at least one heating element, wherein a biasing force of said biasing mechanism biases said at least one heating element into contact with said feature.

Optionally, said at least one heating element is mounted to said cooking container adjacent said feature.

Optionally, said at least one heating element includes a first contact and a second contact is mounted within said housing, wherein said first contact is operably coupled to said second contact to deliver power to said at least one heating element when said cooking container is arranged within said hollow interior.

Optionally, fluid is deliverable from said fluid source to said feature at at least one of a predetermined time interval and a predetermined rate.

Optionally, fluid is deliverable from said fluid source to said hollow interior in response to a sensed parameter of the cooking system.

Optionally, said sensed parameter is a humidity within said hollow interior.

Optionally, fluid is delivered to said feature during operation of said at least one heating element.

Optionally, said at least one heating element includes a first heating element and a second heating element, wherein said first heating element is operable to heat a flow of air circulating within said hollow interior and said second heating element is operable to heat said feature of said cooking container.

Optionally, said first heating element is not energized when said fluid is delivered to said feature.

Optionally, a flow control mechanism is disposed within a fluid flow path extending between said fluid source and said feature, said flow control mechanism being adjustable to control a flow of said fluid delivered to said feature of the cooking system.

According to another arrangement, not claimed, a cooking system for cooking food includes a housing having a hollow interior and a cooking container receivable within the hollow interior. The cooking container has a cooking chamber. A heatable surface is arranged in fluid communication with said cooking chamber via an outlet and a fluid source is arranged in fluid communication with said heatable surface via an inlet. The inlet forms at least part of the outlet.

Optionally, an upper end of said cooking container is arranged adjacent to said heatable surface, said upper end having at least one opening formed therein.

Optionally, said upper end of said cooking container further comprises a radially outwardly extending flange, said at least one opening being formed in said flange.

Optionally, said at least one opening is both said inlet and said outlet.

Optionally, said at least one opening includes at least one first opening and at least one second opening, wherein said at least one first opening forms said inlet and both said at least one first opening and said at least one second opening form said outlet.

Optionally, an area of said at least one first opening is greater than an area of said at least one second opening.

Optionally, said at least one second opening includes a plurality of second openings.

Optionally, a movable component is receivable within said hollow interior, said heatable surface being formed in said movable component.

Optionally, a heating element is operable to heat said heatable surface, said heating element being mounted to said movable component.

According to another arrangement, not claimed, a cooking system for cooking food includes a housing having a hollow interior and a cooking container receivable within said hollow interior. The cooking container is insertable into said hollow interior in a first direction. When said cooking container is received within said hollow interior, a seal is formed about said cooking container in a second direction distinct from said first direction. The seal is formed in response to said movement of said cooking container in said first direction.

Optionally, said cooking container has an upper end and said seal is formed at said upper end.

Optionally, a movable component is receivable within said hollow interior, said movable component having a cavity, and said cooking container being arrangeable within said cavity.

Optionally, said movable component is movable in unison with said cooking container in said first direction and is movable relative to said cooking container in said first direction.

Optionally, said cooking container is movable in said first direction to a fully inserted position in response to movement of said movable component in said first direction.

Optionally, said cooking container is movable in said second direction to form said seal in response to further movement of said movable component in said first direction.

Optionally, said movable component has at least one rail guide and said housing has at least one rail, wherein engagement between said at least one rail guide and said at least one rail defines a path of movement of said movable component and said cooking container in said first direction.

Optionally, when said cooking container is in said fully inserted position, said movable component is configured to move in said second direction in response to said further movement of said movable component in said first direction.

Optionally, said first direction is orthogonal to said second direction.

Optionally, said first direction is horizontal and said second direction is vertical.

According to another arrangement, not claimed, the cooking system includes a housing having a hollow interior, at least one heating element positioned to direct heat into said hollow interior and a fluid flow path arranged in fluid communication with said hollow interior. The at least one heating element is energizable while a liquid provided to said hollow interior via said fluid flow path is evaporated.

Optionally, said liquid is delivered to a heatable surface within said hollow interior via said fluid flow path.

Optionally, said liquid is provided to said hollow interior via said fluid flow path by gravity.

Optionally, a flow control mechanism is disposed along said fluid flow path to control a flow of said liquid to said hollow interior.

Optionally, said flow control mechanism is operable in response to a sensed parameter of the cooking system.

Optionally, said flow control mechanism is operable based at least one of a predetermined rate and a predetermined time interval associated with said operation of the cooking system.

Optionally, a lid is provided for sealing an upper end of said hollow interior.

Optionally, said lid is movable relative to said housing.

Optionally, said lid is formed as part of said housing.

Optionally, said at least one heating element is a first heating element associated with said lid and a second heating element associated with said housing.

Optionally, said second heating element is energizable to evaporate said liquid provided to said hollow interior.

Optionally, the cooking system includes a convection heating system, and said first heating element is part of said convection heating system.

Optionally, said convection heating system further comprises an air movement device, said air movement device being operational while said liquid provided to said hollow interior via said fluid flow path is evaporated.

Optionally, the system further comprises: a motor arranged within a first portion of said lid, said motor being coupled to said air movement device arranged within said second portion of said lid and a gasket for sealing said motor at said interface between said first portion and said second portion.

Optionally, a pressure within said hollow interior remains generally constant during operation of the cooking system.

Optionally, said hollow interior is sealed against fluid intake during operation of the cooking system.

Optionally, at least one inlet vent and at least one outlet vent are arranged in fluid communication with said hollow interior, wherein during operation of the cooking system, said at least one inlet vent is sealed and said at least one outlet vent is open.

According to another arrangement, not claimed, a cooking system for cooking food includes a housing having a hollow interior, at least one heating element positioned to direct heat into said hollow interior, and a steam generation system including a fluid source associated with said housing and a fluid flow path fluidly connecting said fluid source and said hollow interior. An outlet of said fluid flow path is disposed adjacent a surface of the cooking system, said surface being heatable to evaporate fluid provided from said fluid source.

Optionally, a cooking container is positionable in said hollow interior and defining a container interior, said surface being heatable to evaporate fluid provided from said fluid source being a surface of said cooking container, wherein said outlet of said fluid flow path is disposed within said container interior adjacent said heatable surface.

Optionally, said heatable surface of said cooking container is a bottom surface of said cooking container.

Optionally, said fluid flow path is at least partially defined by a recessed region formed in said cooking container.

Optionally, a lid is provided for sealing an upper end of said hollow interior.

Optionally, said lid is movable relative to said housing.

Optionally, said lid is formed as part of said housing.

Optionally, said fluid source is a reservoir removably mounted to said lid.

Optionally, said at least one heating element is a first heating element associated with said housing and a second heating element associated with said lid, said first heating element being energizable to heat said surface of the cooking system.

Optionally, fluid is deliverable from said fluid source to said hollow interior at least one of a predetermined time interval and a predetermined rate.

Optionally, fluid is deliverable from said fluid source to said hollow interior in response to a sensed parameter of the cooking system.

Optionally, said sensed parameter is said humidity within said hollow interior.

Optionally, said steam generation system includes a flow control mechanism disposed within said fluid flow path, said flow control mechanism being adjustable to control a flow of said fluid delivered to said heatable surface of the cooking system.

According to another arrangement, not claimed, a cooking system for cooking food include a housing having a hollow interior, at least one heating element positioned to direct heat into said hollow interior, and an inlet vent disposed in said housing in fluid communication with said hollow interior. The cooking system is operable in a plurality of modes including a first air fry mode and a second air fry mode. The inlet vent has a first configuration in said first air fry mode and a second configuration distinct from said first configuration in said second air fry mode.

Optionally, in said first configuration, said inlet vent is at least partially open and in said second configuration, said inlet vent is sealed.

Optionally, an outlet vent is disposed in said housing, said outlet vent being arranged in fluid communication with said hollow interior.

Optionally, in both said first configuration and said second configuration, said outlet vent is at least partially open to exhaust fluid from said hollow interior.

Optionally, said outlet vent includes an opening and an exposed portion of said opening in said second configuration is smaller than said exposed portion of said opening in said first configuration.

Optionally, at least one of said inlet vent and said outlet vent includes an opening and a mechanism for adjusting a portion of said opening to control a fluid flow through said opening.

Optionally, said mechanism is operable in response to said selected mode of said plurality of modes.

Optionally, said mechanism is operable in response to said a sensed parameter of the cooking system.

Optionally, in said first air fry mode, said hollow interior has a dry cooking environment and in said second air fry mode, said hollow interior has a wet cooking environment.

Optionally, said housing includes a lid, said inlet vent being formed in said lid.

According to another arrangement, not claimed, a cooking system includes a housing having a hollow interior and at least one heating element positioned to direct heat into said hollow interior The at least one heating element is energizable to achieve a desired dry-bulb temperature and a desired wet-bulb temperature. The desired dry-bulb temperature is greater than said desired wet-bulb temperature.

Optionally, said desired wet-bulb temperature is associated with 100% humidity in said hollow interior.

Optionally, said at least one heating element includes a first heating element and a second heating element, said first heating element being energizable to achieve said desired dry-bulb temperature and said second heating element being energizable to achieve said desired wet-bulb temperature.

Optionally, a lid is arranged adjacent an upper end of said hollow interior, wherein said first heating element is disposed within said lid and said second heating element is disposed within said housing.

Optionally, said first heating element is operable to heat a flow of air circulating within hollow interior and said second heating element is operable to heat a surface of the cooking system.

Optionally, a liquid provided to said heated surface of the cooking system is evaporated to increase control said wet-bulb temperature within said hollow interior.

Optionally, said liquid is provided from a fluid source positionable about said housing.

Optionally, a fluid flow path extends from said fluid source arranged in fluid communication with said sealed hollow interior.

Optionally, a flow control mechanism is disposed along said fluid flow path to control a flow of said liquid to said hollow interior.

Optionally, said flow control mechanism is operable in response to a sensed parameter of the cooking system.

Optionally, said flow control mechanism is operable based at least one of a predetermined rate and a predetermined time interval associated with said operation of the cooking system.

### BRIEF DESCRIPTION OF THE FIGURES

The accompanying drawings incorporated in and forming a part of the specification embodies several aspects of the present disclosure and, together with the description, serves to explain the principles of the disclosure. In the drawings:
FIG. 1 is a perspective front view of a cooking system according to an embodiment;
FIG. 2 is a front view of the cooking system of FIG. 1 according to an embodiment;
FIG. 3 is a side view of the cooking system of FIG. 1 according to an embodiment;
FIG. 4 is a perspective view of a movable component of the cooking system in an open position according to an arrangement not claimed;
FIG. 5 is a side view of the movable component of the cooking system in an open position according to an embodiment;
FIG. 6 is a perspective cross-sectional view of the cooking system when the movable component is in a partially open position according to an embodiment;
FIG. 7 is a schematic diagram of the cooking system according to another embodiment;
FIG. 8 is a cross-sectional view of the cooking system according to an embodiment;
FIG. 9A is a perspective view of member arranged at an interface between a movable component and a housing of the cooking system according to an embodiment;
FIG 9B is a front view of a ramp profile of the member of FIG. 9A according to an embodiment;
FIG. 10 is a cross-sectional view of the cooking system when the cooking container is fully inserted but not sealed within the interior according to an embodiment;
FIG. 11 is a cross-sectional view of the cooking system when the cooking container is sealed within the interior according to an embodiment;
FIG. 12A is a schematic diagram of an inlet vent and an outlet vent of the cooking system in a steam air frying mode according to an embodiment;
FIG. 12B is a schematic diagram of an inlet vent and an outlet vent of the cooking system in a dry air frying mode according to an embodiment;
FIG. 13 is a schematic diagram of a control system for a cooking system according to an embodiment;
FIG. 14 is a detailed view of a portion of the perspective cross-sectional view of a portion of the cooking system according to an embodiment;
FIG. 15 is a perspective sectional view of a portion of the cooking system according to another arrangement, not claimed; and
FIG. 16 is a schematic diagram of a steam generation system of the cooking system according to an embodiment.
FIG. 17 is a perspective front view of a cooking system according to another embodiment;
FIG. 18 is a front view of the cooking system of FIG. 17 according to an embodiment;
FIG. 19 is a side view of the cooking system of FIG. 17 according to an embodiment;
FIG. 20 is a perspective cross-sectional view of the cooking system of FIG. 17 according to an arrangement not claimed;
FIG. 21 is a schematic diagram of a portion of the cooking system according to an arrangement not claimed;
FIG. 22A is a plan view of a lid of the cooking system during a steam air fry operation according to an embodiment;
FIG. 22B is a plan view of a lid of the cooking system during a standard air fry operation according to an embodiment;
FIG. 23 is a schematic diagram of a of the cooking system according to an embodiment;
FIG. 24 is a block diagram illustrating a control path for a cooking system according to an embodiment; and
FIG. 25 is a plan view of a cooking container for use with the cooking system according to an arrangement not claimed.

The detailed description explains embodiments of the disclosure, together with advantages and features, by way of example with reference to the drawings.

### DETAILED DESCRIPTION

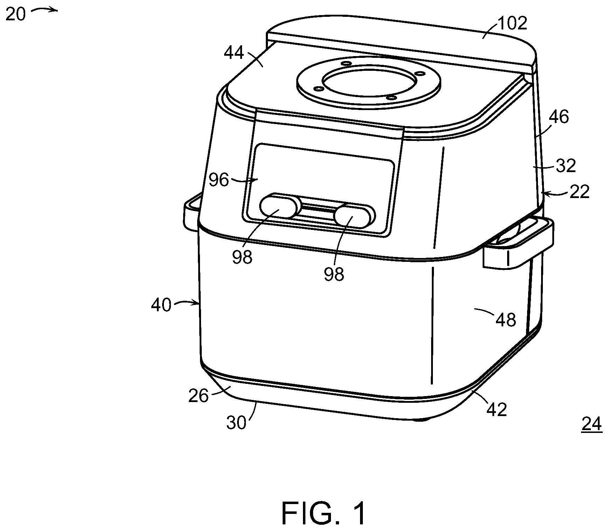

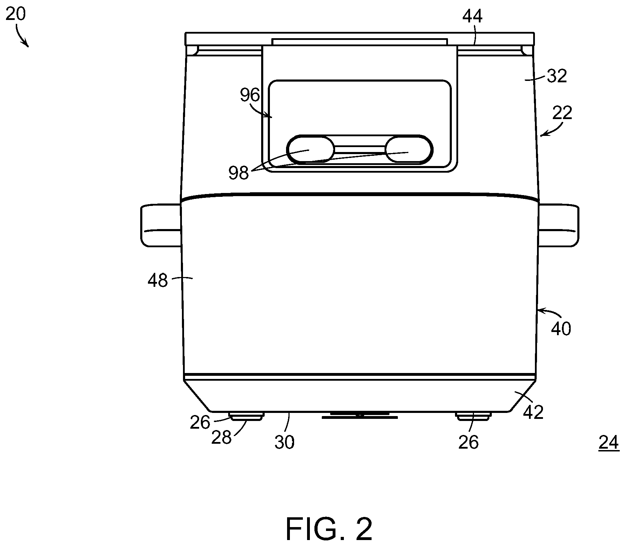

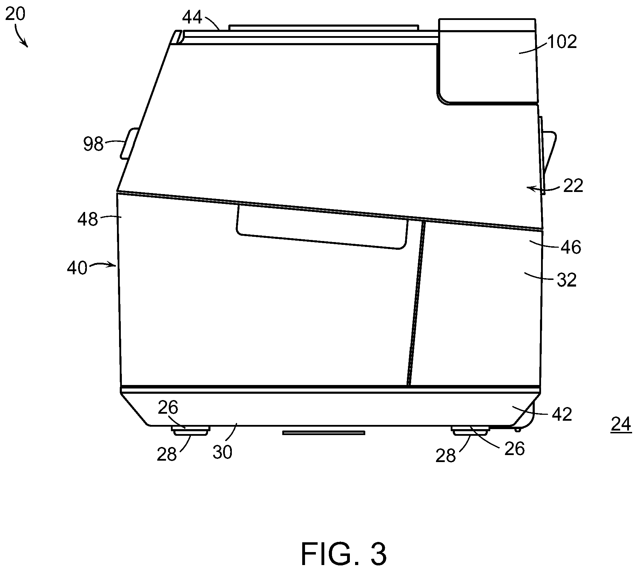

With reference to FIGS. 1-3, an example of a cooking system 20 configured to perform an air frying operation is illustrated. In the illustrated, non-limiting embodiment, the cooking system 20 includes a body 22. The body 22 may be supported on a supporting surface 24, such as a countertop for example, by one or more feet 26. The at least one foot 26 may extend from the body 22 to define a surface 28 over which the cooking system 20 may contact the adjacent supporting surface 24. The bottom surface of the feet 26 may be flush with, or alternatively, may extend out of plane from the bottom 30 of the body 22. In the illustrated, non-limiting embodiment, the body 22 includes four feet 26 arranged adjacent a front and back of opposing sides of the body 22 (see FIGS. 2 and 3); however, it should be understood that a body 22 having a single foot, two feet, or any number of feet 26 is within the scope of the disclosure.

The body 22 includes a housing 32 made of any suitable material, such as glass, aluminum, plastic, or stainless steel for example. Referring now to some of the interior features of the cooking system 20, an inner surface of the housing 32 defines at least a portion of a hollow interior 34. A liner 36 formed from any suitable conductive material, such as aluminum for example, may be disposed within the hollow interior 34. In an embodiment, the liner 36 may form at least a portion of the inner surface of the housing 32 defining the hollow interior (though surfaces inside the liner 36 or outside the liner 36, such as plastic around the liner 36 for example, may also define the hollow interior 34).

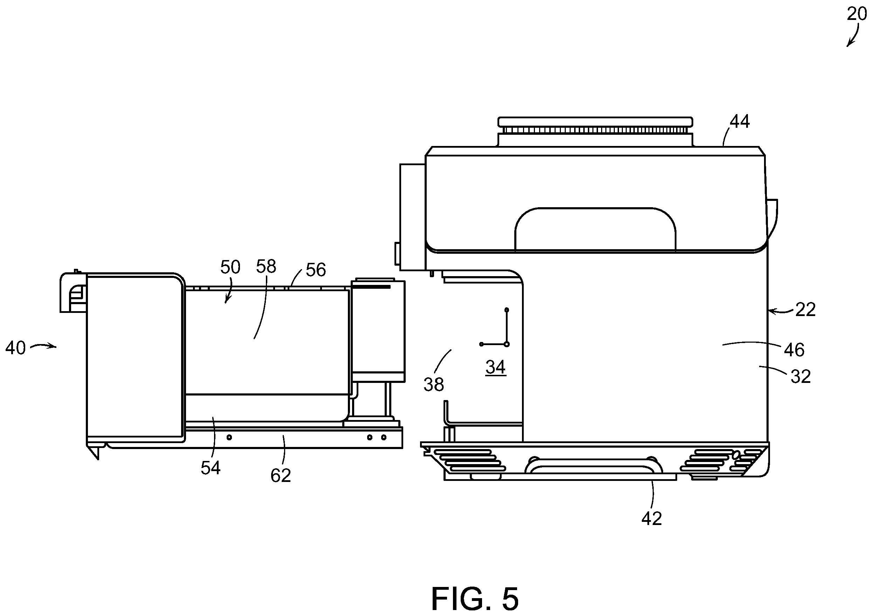

In the non-limiting embodiment illustrated in FIGS. 1-6, the housing 32 has an opening 38 formed therein to provide access to the hollow interior 34 and a component 40 of the cooking system 20 is movable relative to the housing 32 to selectively cover and/or seal the opening 38, and therefore the hollow interior 34. The movable component 40 can be made of any suitable material, including but not limited to glass, aluminum, plastic, or stainless steel for example. Further, the movable component 40 may be permanently or removably connected to the body 22.

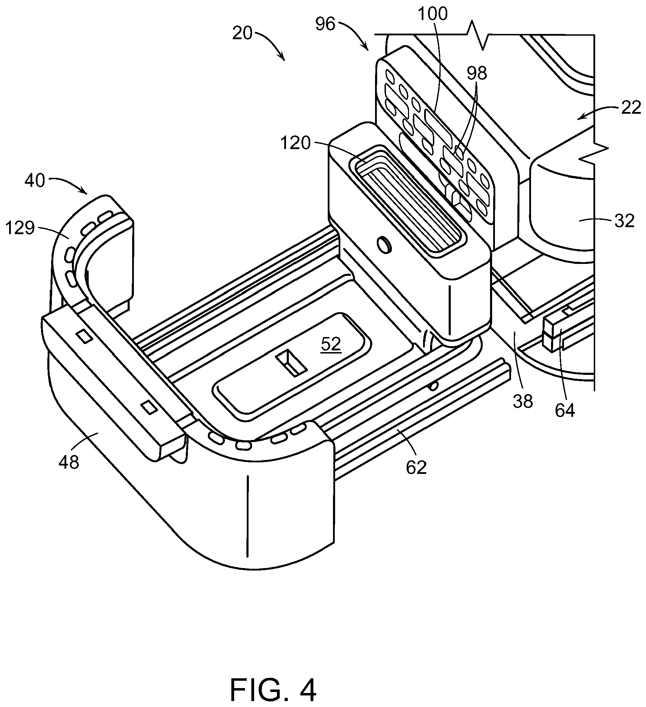

As shown, the housing 32 has a closed first end 42 and a closed second end 44, and at least one sidewall 46, such as formed at least partially by the liner 36, extends between the first end 42 and the second end 44 to define the hollow interior 34. **In** the illustrated, non-limiting embodiment of FIG. 4, the opening 38 is formed in one or more sidewalls 46 of the housing 32, and the movable component 40 may be a drawer translatable along an axis into and out of the hollow interior 34 via the opening 38. When the movable component 40 is closed, and therefore at a position suitable for performing a cooking operation, an exterior surface 48 of the movable component 40 may be flush with an adjacent exterior surface of the housing 32. However, embodiments where a portion of the movable component 40 extends beyond the exterior surface of the housing 32 are also contemplated herein.

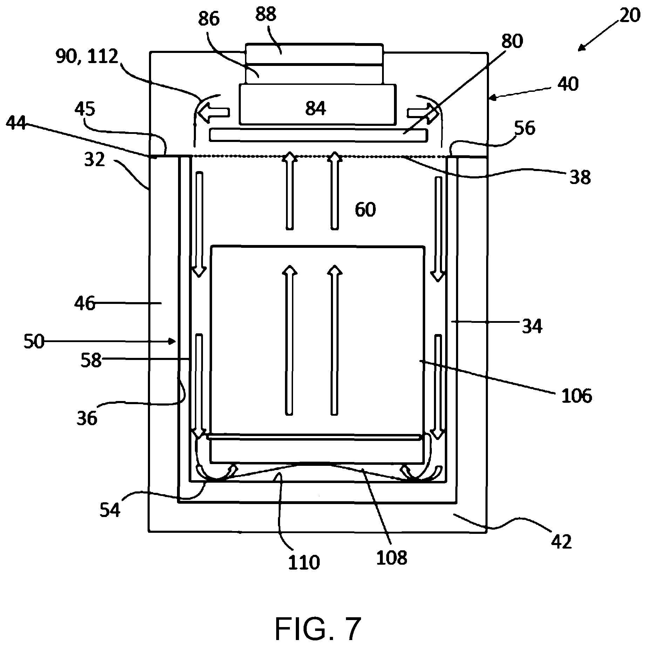

**In** another embodiment, best shown in FIG. 7, the opening 38 is formed at the second end 44 of the housing 32. **In** such embodiments, the movable component 40 may be a lid movable relative to the body 22 to cover and expose the opening 38. The lid may be rotatable about an axis, translatable along an axis, or movable in any other suitable manner to selectively seal the opening 38. **In** embodiments where the movable component 40 is a lid, one or more fastening mechanisms (not shown) may, but need not be used to secure the lid 40 to the body 22 when the lid 40 is in the closed position. Any suitable type of fastening mechanism capable of withstanding the heat generated during operation of the cooking system 20 is considered within the scope of the disclosure.

A food cooking container 50 may be positionable within the hollow interior 34 of the body 22 via the opening 38 formed in the housing 32. **In** embodiments where the opening 38 is formed at a side or sidewall 46 of the housing 32, the food cooking container 50 may be inserted into the hollow interior 34 by translating the food cooking container 50 along a generally horizontal axis, through the opening 38 (see FIGS. 4-6). In such embodiments, the cooking container 50 may be positioned within a cavity or hollow interior 52 of the movable component 40 for movement therewith. However, it should be understood that embodiments where the cooking container 50 is the movable component 40 are also contemplated herein.

Alternatively, in embodiments where the opening 38 is formed at an end 44 of the housing 32 (FIG. 7), the food cooking container 50 is insertable into the hollow interior 34 independent of the movement of the movable component 40 relative to the body 22. For example, the cooking container 50 is installed within the hollow interior 34 of the body 22 when the lid 40 is in an open position, distanced from the body 22. Further, although the cooking container 50 is illustrated and described herein as being removable from the movable component 40 or the body 22, embodiments where the cooking container 50 is integrally formed with the movable component 40 or the body 22 are also contemplated herein.

In an embodiment, the food cooking container 50 has a body including a first closed end 54, a second open end 56 and at least sidewall 58 extending between the first end 54 and the second end 56 to define a hollow interior or cooking chamber 60 therein. However, a cooking container 50 having another suitable configuration is also within the scope of the disclosure. The cooking chamber 60 of the cooking container 50 is designed to receive and retain one or more consumable products, such as food products for example, and the second end 56 of the cooking container 50 is generally open to provide access for positioning such food items therein. Examples of food products suitable for use with the cooking system 20, include but are not limited to, meats, fish, poultry, bread, rice, grains, pasta, vegetables, fruits, and dairy products, among others.

In an embodiment, the cooking chamber 60 of the cooking container 50 is at least 9 inches by 9 inches, such as 9.5 inches by 9.5 inches for example. Further, in an embodiment, the cooking chamber 60 of the cooking container 36 has a depth of at least 90 mm, such as 93 mm for example. In another embodiment, the cooking chamber 60 of the cooking container 50 has a depth of at least 95 mm, or at least 100 mm, such as 102 mm for example. However, it should be understood that a cooking container 50 having any suitable size and shape is within the scope of the disclosure.

The cooking container 50 may be formed from any suitable material, including but not limited to a ceramic, metal, or die cast aluminum material. In an embodiment, one or more interior surfaces 61 of the cooking container 50 includes a nano-ceramic coating and an exterior surface of the cooking container 36 includes a silicone epoxy material. However, any suitable material capable of withstanding the high temperatures required for cooking food products is contemplated herein.

One or more accessories may be compatible for use with the cooking system 20. Examples of such accessories include, but are not limited to, a diffuser and a crisping insert for example. In such embodiments, the accessories may be receivable within the interior 34 of the body 22, or alternatively, within the cooking chamber 60 of the cooking container 50.

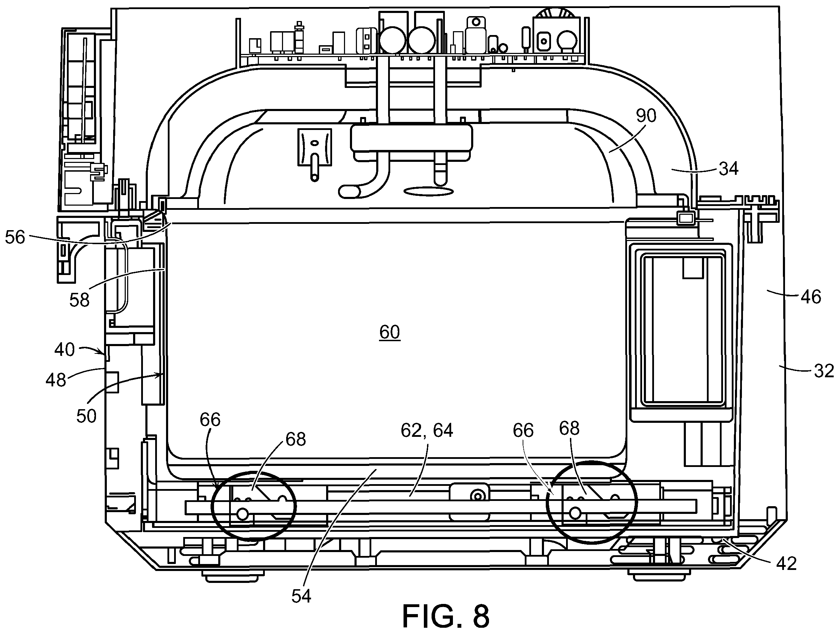

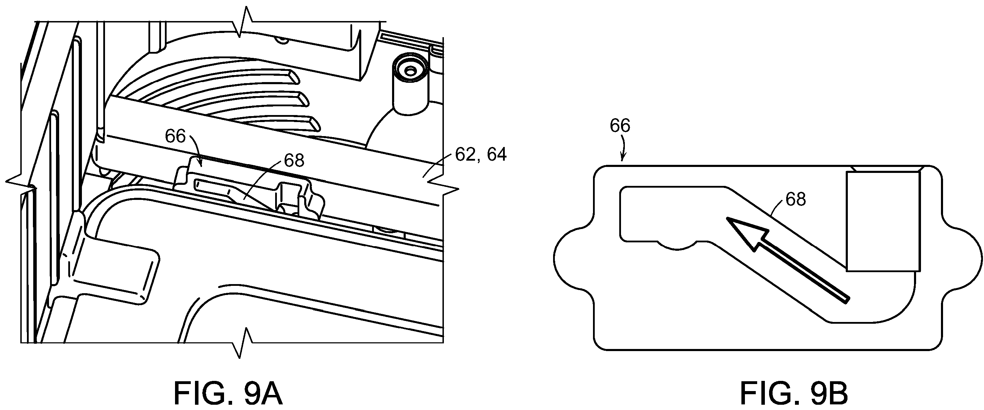

When the opening 38 is covered by the movable component 40, such as when the movable component 40 is in the closed position, the open end 56 of the cooking container 50 may be sealed. With reference now to FIGS. 8-11, in embodiments where the opening 38 is formed at a side or sidewall 46 of the housing 32, the cooking container 50 and/or a portion of the movable component 40 may be configured to move vertically as the movable component 40 translates horizontally to selectively seal against a corresponding surface of the body 22 or housing 32. In such embodiments, a cooking volume may by defined by the cooking chamber 60 of the food cooking container 50 and the portion of the interior 34 of the body 22 disposed upwardly adjacent the second end 56 of the cooking container 50.

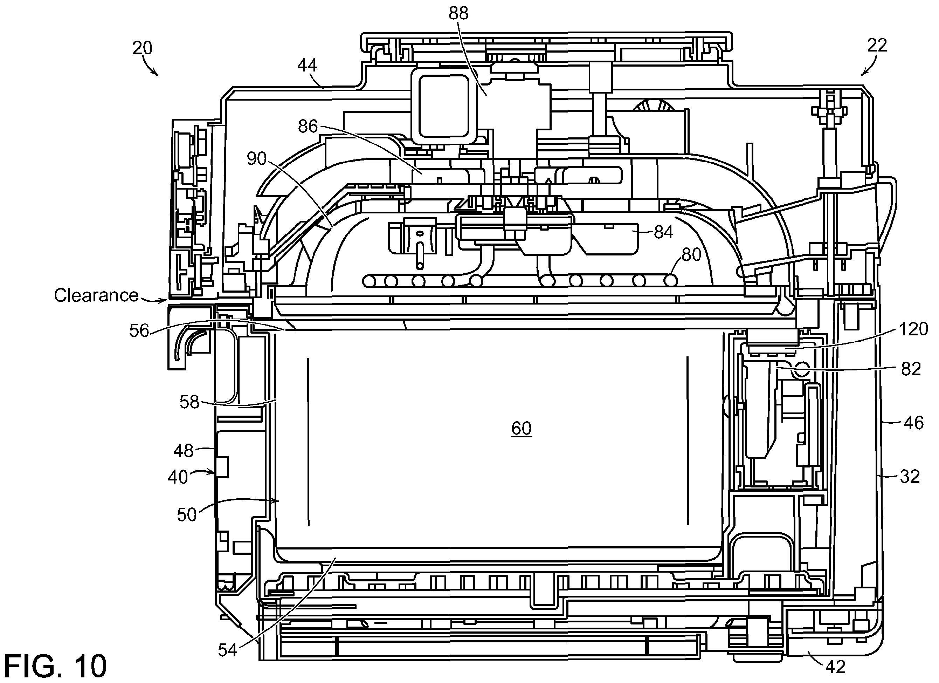

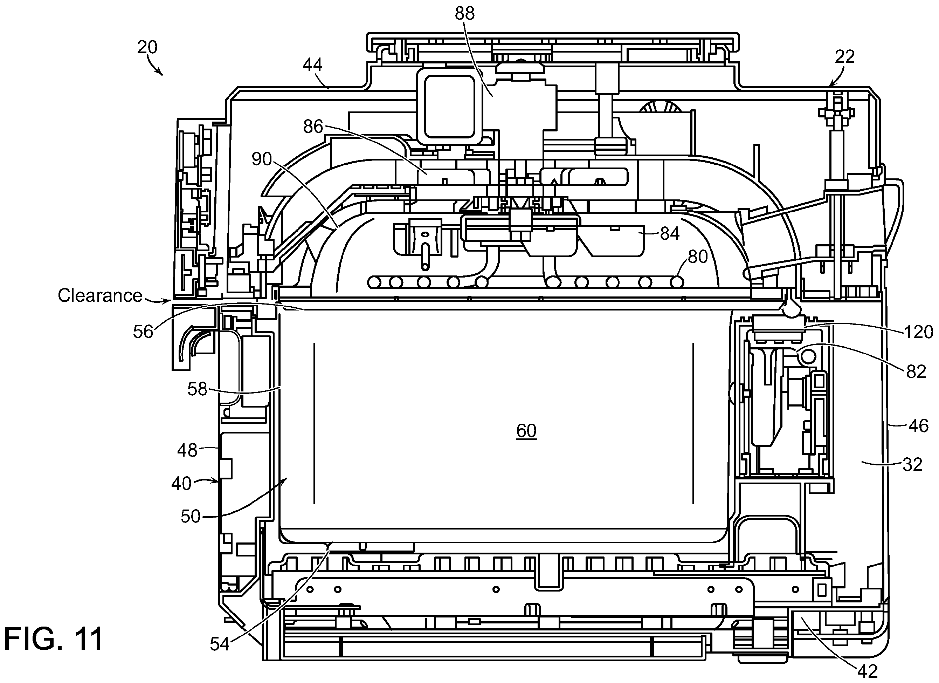

As shown, the movable component 40 may include one or more rail guides 62 that slidably engage with one or more corresponding rails 64 located within the hollow interior 34. In an embodiment, a member 66 including a ramp profile 68 is formed at the interface between the rails 64 and the rail guides 62. In operation, the movable component 40 and the cooking container 50 arranged within the cavity 52 of the movable component 40 move in unison into the hollow interior 34 of the body 22 via the sliding engagement between the rail guides 62 and the rails 64. Accordingly, the drawer 40 and cooking container 50 move into the hollow interior 34 along a horizontal axis X defined by the rails 64 until the cooking container 50 is fully inserted into the hollow interior 34. When the cooking container 50 is "fully inserted" into the hollow interior 34 (see FIG. 10), the cooking container 50 cannot travel further into the hollow interior 34 in the direction of insertion. However, in this fully inserted position, the second end 56 of the cooking container 50 is not sealed. After the cooking container 50 reaches the fully inserted position, the movable component 40 is configured to move relative to the cooking container 50 along a path defined by the ramp profile 68. In the illustrated, non-limiting embodiment, as the movable component 40 continues to move horizontally in the direction of insertion relative to the cooking container 50, the ramp profile 68 causes the movable component 40 to simultaneously move vertically. Because the cooking container 50 is supported by the movable component 40, the cooking container 50 is configured to move vertically in unison with the movable component 40. Accordingly, the vertical movement of the movable component 40 positions the open end 56 of the cooking container 50 and/or a portion of the movable component 40 in sealing engagement with an adjacent surface or component of the body 22 or housing 32 (see FIG. 11). The sealing engagement described herein may form an air-tight seal, and in some embodiments, a pressure tight seal.

**In** embodiments where the opening 38 is formed at an end 44 of the housing 32 and the movable component 40 is a lid, it should be noted that when the lid is in a closed position, the lid is configured to form an air-tight seal, and in some embodiments a pressure tight seal, with the open end 56 of the cooking container. **In** such instances, a cooking volume may be defined between the cooking chamber 60 of the cooking container 50 and the closed lid 40. **In** an embodiment, a diameter of the lid 40 is generally complementary to a diameter of the body 22 at the open end 44 such that the lid 40 covers and/or seals not only the cooking container 50, but also the upper surface 45 of the housing 32.

To prevent the pressure within the interior 34 or cooking chamber 60 from increasing during a cooking operation as a result of the increased temperature within the interior 34 or cooking chamber 60, the cooking system 20 includes at least one vent arranged in fluid communication with the ambient atmosphere external to the cooking system 20. Although, the one or more vents are illustrated as being formed in a portion of the body 22, it should be understood that a cooking system 20 having vents arranged in the movable component 40 or at another suitable location of the cooking system 20 are within the scope of the disclosure.

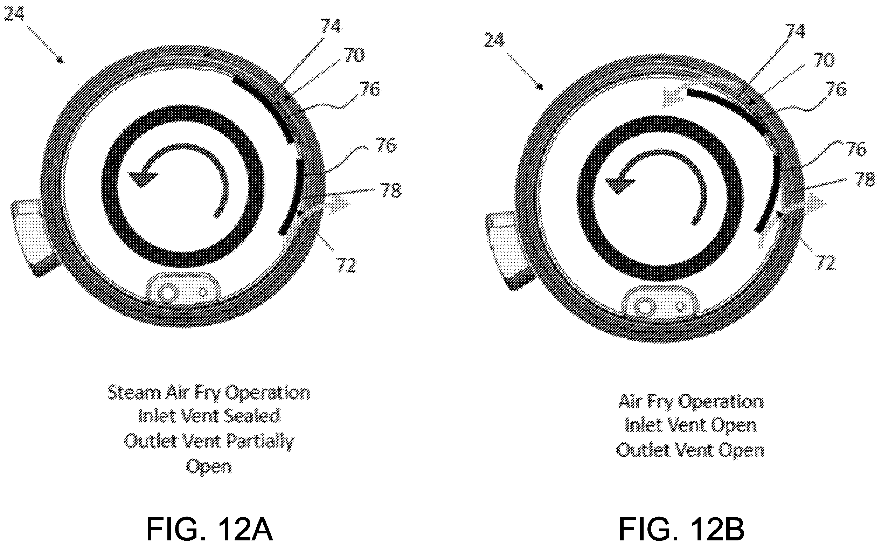

**In** the illustrated non-limiting embodiment, best shown in FIGS. 12A and 12B, the cooking system 20 includes at least one inlet vent 70 through which a fluid is configured to flow into the cooking volume and at least one outlet vent 72 through which fluid is expelled from the cooking volume to outside of the cooking system 20. **In** an embodiment, an opening 74 of the at least one inlet vent 70 through which fluid flows, such as air for example, is adjustable to control the amount of air provided to the cooking volume. For example, the inlet vent 70 may include a flap, slats, or another mechanism 76 movable to control the size of the opening 74 of the inlet vent 70. However, any suitable configuration of the inlet vent 70 that allows the opening to be adjusted between an open position and a fully sealed position is within the scope of the disclosure. The outlet vent 72 may be a standard fixed vent, or alternatively, may similarly include a mechanism 76 movable to selectively control a flow of fluid through an opening 78 thereof.

In an embodiment, a flow through one or both of the inlet vent 70 and the outlet vent 72 is controlled in response to a selected cooking operation of the cooking system 20. For example, during a first cooking operation, such as a standard air frying operation, the inlet vent 70 may be partially or fully open, so that a fluid may flow through the opening 74 into the cooking volume (see FIG. 12B). During a second cooking operation, such as a steam air frying cooking operation (to be described in more detail below), the opening 74 of the inlet vent 70 may be sealed or substantially sealed by mechanism 76 (see FIG. 12A) to block air from flowing into the cooking volume. Alternatively, or in addition, adjustment of an allowable flow through the inlet vent 70 and/or the outlet vent 72 may be performed in response to feedback from one or more sensors disposed within the cooking volume. Examples of parameters that may be monitored by the sensors and/or used to control a position of the mechanisms 76 include but are not limited to a wet bulb temperature and a dry bulb temperature of the cooking system 20. As will be discussed in more detail below, fluid may be configured to flow through the outlet vent 72 during either the first or second cooking operation.

It should be understood that in an embodiment, the cooking system 20 may be able to perform a cooking operation where an increased pressure within the cooking volume is desirable, such as a pressure cooking operation for example. In such embodiments, a highpressure cooking environment may be achievable, with pressure levels reaching and/or exceeding 40kPa. Further, in such embodiments, one or both of the inlet and outlet vents 70, 72 may be generally closed to prevent fluid flow into and/or out of the cooking volume. However, the outlet vent 72 may be operable as a pressure relief valve to limit the pressure within the cooking volume from exceeding a predetermined threshold.

With reference now to FIGS., the cooking system 20 includes at least one heating element operable to heat the cooking container 50 and/or the cooking volume during one or more modes of operation of the cooking system 20. As shown, a heating element 80 is positioned generally at or above the second end 56 of the cooking container 50, such as proximate a center of the cooking chamber 60 of the cooking container 50 for example. The at least one heating element 80 may be located completely outside of the cooking container 50, such as vertically offset from the second end 56 or upper extent of the cooking container 50. For example, in embodiments where the opening 38 is formed at a side 46of the housing 32, the heating element 80 may be mounted within the hollow interior 34, such as near the second end 44 of the housing 32 for example. In embodiments where the opening 38 is formed at the second end 44 of the housing 32, the heating element 80 may be remote from the body 22, such as within the movable component 40 for example.

Alternatively, or in addition, the cooking system 20 may include another heating element 82. The heating element 82 may be arranged within a portion of the housing 32, such as within the hollow interior 34 for example, adjacent a part of the cooking container 50. In other embodiments, the heating element 82 may be mounted to and movable with the cooking container 50 or the movable component 40. However, it should be understood that embodiments where the heating element 82 is arranged at another location are also contemplated herein.

The at least one heating element 80, 82 may be capable of performing any suitable type of heat generation. For example, a heating element 80, 82 configured to heat the cooking container 50 or one or more food items located within the cooking chamber 60 of the cooking container 50 via conduction, convection, radiation, and induction are all within the scope of the disclosure. The heating element 80 may be used to heat the cooking container 50 or one or more food items therein via a "non-contact" cooking operation. As used herein, the term "non-contact cooking operation" includes any cooking operation where a heating element or heat source is not arranged in direct or indirect contact with a food item, such as, but not limited to, convective and radiant heating.

In the illustrated, non-limiting embodiment, the heating element 80 is a convective heating element operable to cook food by heating an air flow provided to the cooking volume. In such embodiments, the cooking system 20 additionally includes an air movement device 84, such as a fan for example, operable to circulate air within the cooking volume. The air is heated as it flows along its path of circulation, such as by flowing over a portion of the at least one heating element 80. In the illustrated, non-limiting embodiment, the air movement device 84 is driven by a motor 86 having a separate cooling mechanism 88 coupled thereto. Although the air movement device 84 is illustrated as being located vertically above the heating element 80, embodiments where the air movement device 84 is arranged at another location, such as adjacent a side of the hollow interior 34 for example, are also within the scope of the disclosure.

In an embodiment, a divider 90 arranged within the upper portion of the hollow interior 34 defines a first portion or chamber including the heating element 80 and the air movement device 84, and a second portion or chamber, including the motor 86 and the cooling mechanism 88. In such embodiments, a sealing device, such as a gasket 92 for example, is positioned between a shaft 94 of the motor 86 and the divider 90 to minimize or eliminate friction of the motor shaft 94 as it rotates, while maintaining an air-tight seal with the divider 90. Although described herein as being located within the interior 34 of the body, it should be understood that in embodiments of the cooking system 20 where the movable component 40 is operable to cover an opening 38 at an end 44 of the housing 32, some or all of the divider 90, heating element 80, air movement device 84, motor 86 and cooling mechanism 88 may be located within the movable component 40.

With reference again to FIGS. 1, 4, and 6, a control panel or user interface 96 of the cooking system 20 is positioned adjacent one or more sides of the housing 32, such as a front of the housing 32 for example. The control panel 96 includes one or more inputs 98 associated with energizing the one or more heating elements 80, 82 of the cooking system 20 by selecting and/or initiating a mode of operation of the cooking system 20. One or more of the inputs 98 may include a light or other indicator to indicate to a user that the respective input has been selected. The control panel 96 may additionally include a display 100 separate from or integral with the at least one input 98.

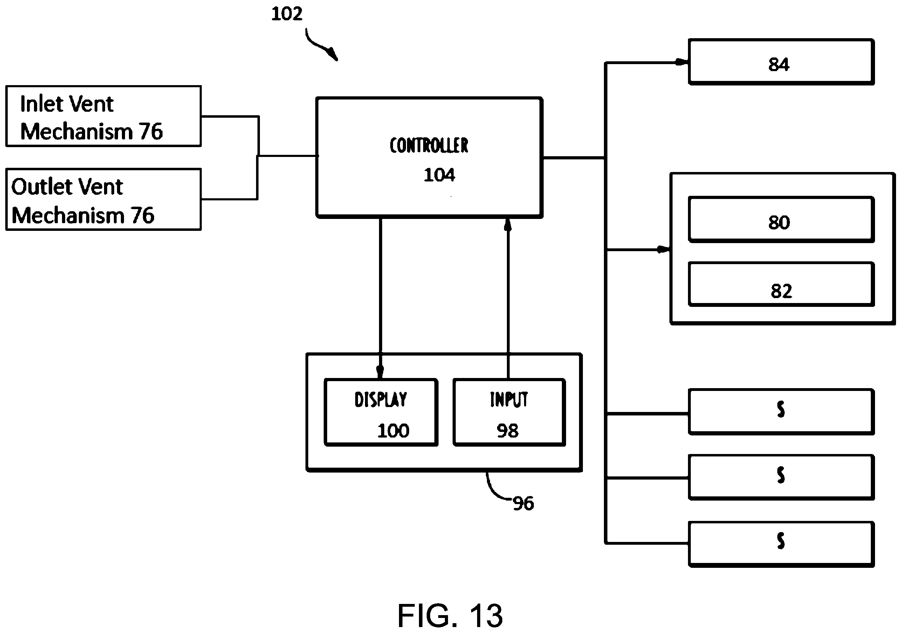

As shown in FIG. 13, a control system 102 of the cooking system 20 includes a controller or processor 104 for controlling operation of the heating elements 80, 82 and air movement device 84 (including the motor 86 and fan 88 associated therewith), which will be discussed in greater detail below), and in some embodiments for executing stored sequences of heating operation. The processor 104 is operably coupled to the control panel 96, to the heating elements 80, 82, to the air movement device 84, and to the mechanisms 76 for controlling a fluid flow through the inlet and outlet vents 70, 72. In addition, in an embodiment, one or more sensors S for monitoring one or more parameters (such as temperature, pressure, lid configuration, etc.) associated with operation of the heating elements 80, 82 may be arranged in communication with the processor 104. It should be understood that the sensors S may be the same, or alternatively, may be different than the sensors that provide feedback to control a fluid flow through the inlet vent 70 and/or outlet vent 72.

In some embodiments, the cooking system 20 may be configured to only perform an air frying operation; however, in other embodiments, the cooking system 20 may be capable of performing a plurality of cooking operations including an air frying operation. In such embodiments, the cooking operations include, but are not limited to standard air frying, steam air frying, steam cooking, and/or any combination thereof. To perform a cooking operation that includes a combination of multiple types of cooking modes, the food item need not be removed from the cooking container 50 as the cooking system 20 transforms between a first mode, such as standard or steam air frying for example, and a second mode, such as steam cooking for example. As previously noted, the at least one input 98 may be used to select a mode or cooking operation of the cooking system 20.

In an embodiment, one of the inputs 98 of the control panel 96 is manually movable by a user between a first position and a second position to select a mode of operation, such as a dry air fry operation (first position) and a steam air fry operation (second position). In the illustrated, non-limiting embodiment, the input 98 includes an actuator that is slidable relative to the housing 32. Further, this actuator may be operably coupled to the inlet vent 70 and outlet vent 72 such that the manual movement of the actuator manipulates the vents 70, 72 to achieve a desired configuration associated with the selected mode of operation. In an embodiment, the functionality of the control system 102 may vary in response to the mode selected by the actuator. For example, one or more inputs 98 of the control panel may be activated when the actuator is in the first position associated with a first cooking mode, and one or more different inputs may be activatable when the actuator is in the second position associated with a second cooking mode.

During a standard air frying operation (first air fry mode), the heating element 80 and the air movement device 84 are used in combination to heat and circulate air through the cooking volume. In such embodiments, an accessory, such as an insert 106 and/or an air diffuser 108 for example (see FIG. 7), may be disposed within the cooking chamber 60 of the cooking container 50, and the food to be cooked may be arranged within the insert. The insert 106 and diffuser 108 are optional system components that may improve air circulation during an air frying cooking operation. The diffuser 108 is positionable anywhere in the cooking chamber 60. In an exemplary, non-limiting embodiment, the diffuser 108 is positioned in contact with the bottom surface 110 of the cooking container 50 and is used in conjunction with the insert 106.

The controller 104 initiates operation of the heating element 80 and the air movement device 84 to circulate hot air represented by the arrows in FIG. 7 through the cooking volume. The air movement device 84 draws air from the center of the insert 106, within which the food may be located, across the heating element 80, and expels the hot air radially outwardly towards a guide 112 (which, in an exemplary embodiment, actually surrounds the fan 84). The guide 112 deflects the air downwardly along the sidewall 58 of the cooking container 50 towards a bottom surface 110 of the cooking container 50 (the arrows in FIG. 7 show exemplary air flow through the system). The air is then drawn up by the fan 84 at the center of the cooking container 50. In an embodiment, the divider 90 may be contoured to perform the functions of the guide 112. However, embodiments including a distinct divider 90 and guide 112 are also contemplated herein.

In embodiments where an insert 106 and/or diffuser 108 is arranged within the cooking container 50, the diffuser 108 may impart a rotational motion to the hot air, thereby creating a vortex as the air. Further, an end of the insert 106 adjacent the diffuser 108 may include a plurality of apertures such that the spinning air flows through the insert 106, over the food therein, before being drawn back up through the heating element 80 and into the fan 84 for further circulation. As the air circulates through the cooking chamber 60 of the cooking container 50 in the manner described above, the hot air cooks and forms a crispy outer layer on the food items disposed therein as a result of the Maillard effect.

In an embodiment, best shown in FIG. 7, during operation in a standard air fry mode, hot air generated by operation of the air movement device 84 may be vented to the exterior of the cooking system 20 via the outlet vent 72. Similarly, fresh air may be drawn in through the opening 74 of the inlet vent 70 to ensure sufficient airflow within the cooking system 20. This intake and exhausting of air from the cooking volume in combination with the circulation of heated air therein achieves a dry cooking environment within the cooking container 50. Further, it should be noted that the heating element 82 is generally not energized during a standard air fry cooking operation.

During operation of the cooking system 20 in a steam air frying operation (second air fry mode), both the heating element 82 and the combination of the heating element 80 and air movement device 84 are used to heat the cooking volume to achieve a desirable wet-bulb temperature and dry-bulb temperature. As used herein, the term "dry-bulb temperature" is the temperature of the air within the cooking volume not affected by the moisture of the air. The term "wet-bulb temperature" as used herein is intended to describe the temperature of the air within the cooking volume while taking the moisture or humidity of the air into account. Accordingly, the difference between the dry-bulb temperature and the wet-bulb temperature depends in part on the moisture or humidity of the cooking environment. For dry bulb temperatures below the boiling point of water, when the air within the cooking volume is at 100% relative humidity (i.e. saturation), the wet-bulb temperature is equal to the dry-bulb temperature. However, once the dry-bulb temperature exceeds the boiling point of water (100°C), the dry-bulb temperature will exceed the maximum wet-bulb temperature, which is limited by the properties of water. Although the wet-bulb temperature cannot directly indicate the relative humidity within the cooking volume for temperatures above the boiling point of water, the wet-bulb temperature is still relevant to cooking since the surface temperature of food generally cannot exceed the boiling point of water due to evaporative cooling.

**In** a steam cooking operation, to achieve the desired wet-bulb temperature, the humidity within the cooking volume is controlled. **In** an embodiment, this humidity control is performed at least partially via the selective generation of steam within the cooking container 50. Steam may be generated within the cooking volume during the steam air fry cooking operation by delivering a fluid, such as water for example, to a hot or heatable surface of the cooking system 20. **In** an embodiment, the heatable surface is periodically or continuously heated by the heating element 82.

The heatable surface of the cooking system 20 is defined by a feature 120, such as a shallow depression or groove for example, formed in one of the housing 32, the cooking container 50, and the movable component 40. **In** an embodiment, the feature 120 is located proximate to the second or upper end 56 of the cooking container 50. As used herein, the term "proximate" is intended to cover embodiments where the feature 120 is formed directly adjacent to or in the second end 56 of the cooking container 50, and also embodiments where the feature 120 is located at a vertical position between the first end 54 and the second end 56 of the cooking container 50, such as at a location about half way between the first end 54 and the second end 56, or at a position closer to the second end 56 than the first end 54, such as at about 75%, 80%, 85%, 90% or 95% of the height of the cooking container 50 measured from the first end 54.

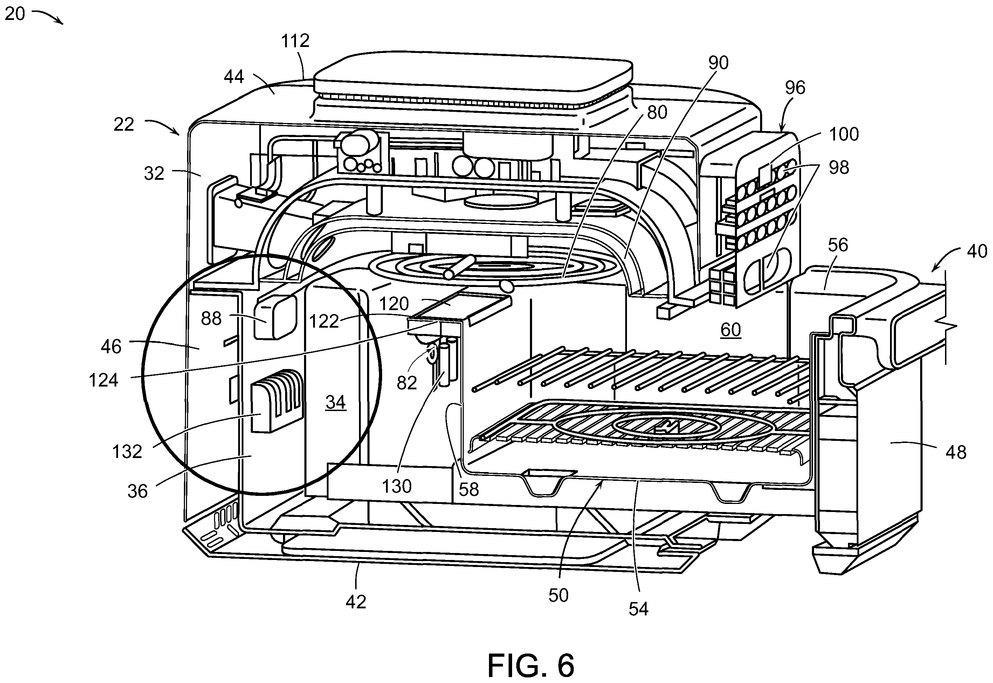

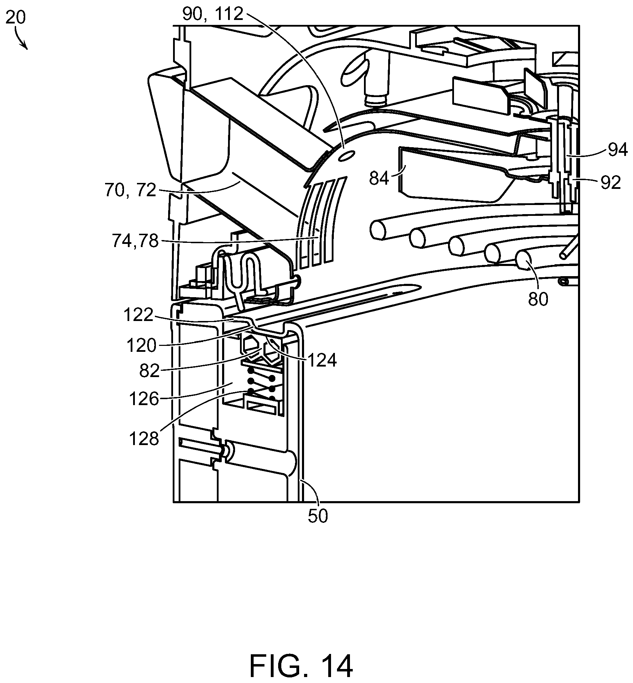

As shown in FIG. 14, in accordance with the invention, the second end 56 of the cooking container 50 includes a radially outwardly extending flange 122, and the feature 120 is formed in the flange 122. When the feature 120 is formed in the flange 122, the heating element 82 may be affixed directly to the cooking container 50 (see FIG. 6). As shown, the heating element 82 is mounted to an exterior surface of the cooking container 50 directly adjacent the bottom surface 124 of the feature 120 formed within the flange 122 of the cooking container 50.

Alternatively, as shown in FIG. 14, the heating element 82 may be arranged within a cavity 126 formed at the upper surface 44 of the housing 32 or an upper surface 129 of a portion of the movable component 40 for example. In such embodiments, when the cooking container 50 is installed relative to the body 22, the flange 122 substantially overlaps the cavity 126. As shown, at least a portion of the feature 120 formed in the flange 122 may be received within the cavity 126. In the illustrated, non-limiting embodiment, a bottom surface 124 of the feature 120 is arranged adjacent to the heating element 82 positioned within the cavity 126. As a result, the heating element 82 is operable to the heat the feature 120 of the cooking container 50 when energized.

The bottom surface 124 of the feature 120 may be arranged in direct contact with the heating element 82 as shown in the FIGS. However, embodiments where the bottom surface 124 indirectly contacts the heating element 82 or where the bottom surface 124 is slightly offset from the heating element 82 are also contemplated herein. In an embodiment, the heating element 82 is mounted within the cavity 126 via a biasing mechanism 128, such as a coil spring for example. The biasing force of the biasing mechanism 128 is operable to move the heating element 82 into direct engagement with the bottom surface 124 of the feature 120 when located within the cavity 126.

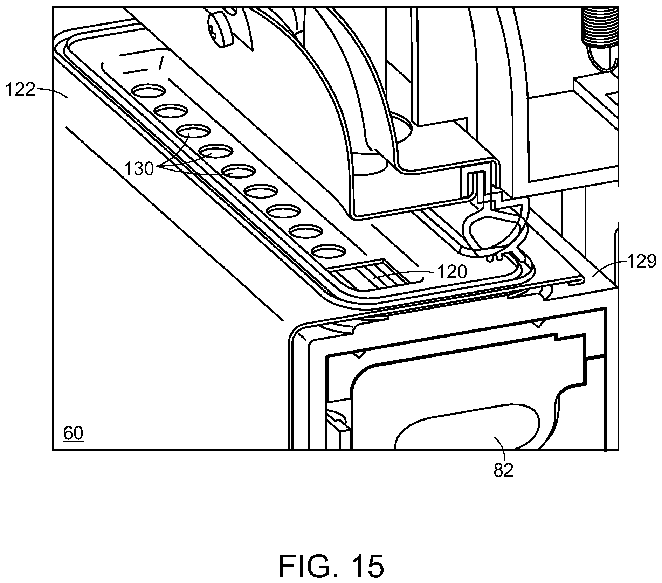

With reference now to FIGS. 4 and 15, in another arrangement, not claimed, the feature 120 is formed in a portion of the movable component 40, such as the portion of the movable component adjacent a back side of the cooking container 50. The heating element 82 may also be arranged within the movable component 40, such as underneath or adjacent to the feature 120. However, the heating element 82 may be mounted at another location when the feature is formed in the movable component 40. In an arrangement, not claimed, the feature is formed in the portion of the movable component 40 that is overlapped by the radially extending flange 122 of the cooking container 50. In such arrangements, not claimed, the flange 122 has one or more openings 130 formed therein. The one or more openings 130 may define a passageway for a fluid to enter the feature 120 and/or may communicate fluid from the passageway to the cooking volume. Fluid may be configured to flow in both directions through one or more of the openings 130, or alternatively, different openings may be used to define a flow path to the feature 120 and from the feature 120, respectively. Further, in an arrangement, not claimed, each of the one or more openings 130 that define a flow path to the feature 120 has an area greater than each of the one or more openings that define a flow path from the feature 120. However, arrangements, not claimed, where the that define a flow path from the feature 120 are greater than or equal in size to the openings that define a flow path to the feature 120 are also contemplated herein. Further, in an arrangement, not claimed, the total number of openings used to deliver fluid to the feature 120 is less than the total number of openings through which fluid is communicated to the cooking volume. Although in each of the embodiments, the feature 120 is illustrated as being arranged adjacent a rear of the cooking system 20, it should be understood that the flange 122 and feature 120 may be formed at any position relative to the cooking container 36.

In each of the embodiments disclosed, the heating element 82 is arranged at a location directly or indirectly beneath or below the flange 122 of the cooking container 50. In embodiments where the heating element 82 is mounted to the cooking container 50 or to the movable component 40, the heating element 82 may include at least one first contact 130 and at least one second contact 132 is mounted to a corresponding surface of the housing 32. When the movable component 40 and/or the cooking container 50 are installed relative to the body 22, the at least one first contact 130 and the at least one second contact 132 are operably coupled, such as via direct engagement for example. As a result, power may be transferred from the second contact 132 to the first contact 130 to operate the heating element 82. Once the cooking container 50 and/or the movable component 40 is moved out of a cooking position, the power to the heating element 82 will be cut. Although first and second contacts 130, 132 are described herein, it should be understood that any suitable mechanism for delivering power to the heating element 82 when the cooking container 50 is installed in a cooking position is within the scope of the disclosure.

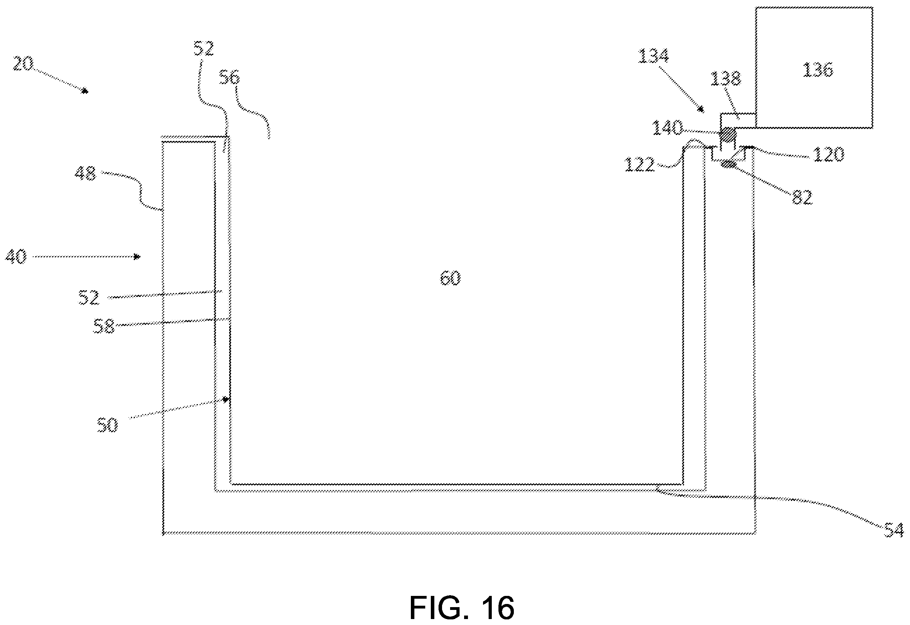

With continued reference to FIGS.14-15 and further reference to FIG. 16, in an embodiment, the cooking system 20 includes a steam generation system 134 having a fluid source 136 and a conduit 138 for delivering fluid from the fluid source 136 to the feature 120. In an embodiment, best shown in FIG. 16, the feature 120 is arranged in fluid communication with the conduit 138, or alternatively, with an outlet of the fluid source 136 directly. Accordingly, fluid from the fluid source 136 may collect within the feature 120. By collecting fluid within a depression or trough 120 formed at or adjacent the second end 56 of the cooking container 50, the potential for the fluid to drip onto the food is minimized, and the fluid evaporated into steam remains separate from any of the drippings generated when the food is cooked.

**In** an embodiment, the fluid source 136 is a reservoir configured to store a desired amount of fluid therein for use during a cooking operation. **In** such embodiments, the reservoir 136 may be permanently or removably affixed to a portion of the cooking system 20, such as a portion of the housing 32 for example. **In** embodiments where the reservoir 136 is removable, the reservoir 136 may be configured to move horizontally and/or vertically relative to the cooking system 20. The reservoir 136, may, but need not include a removable lid configured to selectively seal an open end of the reservoir 136. Further, in some embodiments, the reservoir 136 may include one or more markings to indicate to a user a sufficient amount of fluid required for a cooking operation based on the total volume of food within the cooking container 50. However, in other embodiments, the steam generation system 134 need not include a reservoir 136. Rather, the cooking system 20 may be connectable to a fluid source 136 external to the cooking system 20, such as a faucet for example.

**In** an embodiment, a flow control mechanism 140, such as a valve or other device suitable for controlling the fluid flow provided from the reservoir 136 to the feature 120 is disposed along the fluid flow path defined by the conduit 138, such as upstream from the feature 120 for example. The flow control mechanism 140 may be operated to meter the fluid provided to the feature 120 based on predetermined rate or at a predetermined time interval associated with one or more parameters of a selected cooking operation. Alternatively, the flow control mechanism 140 may be adjusted in response to a signal generated by one or more sensors, for example disposed within the cooking volume. **In** such embodiments, the flow control mechanism 140 may control the flow of fluid provided to the feature 120, and therefore the cooking volume, in response to one or more sensed parameters, such as the humidity within the cooking volume for example. Controlling the flow of fluid provided to the feature 120 prevents excess filling thereof, while limiting the impact on the dry-bulb temperature rise.

The humidity within the cooking volume is alternatively, or additionally controlled by sealing the cooking volume. Accordingly, during a steam air fry operation, in an embodiment, the mechanism 76 of the at least one inlet vent 70 is configured to seal the opening 74 of the inlet vent 70. However, the at least one outlet vent 72 is configured to allow the egress of steam, thereby preventing the buildup of pressure within the cooking volume. Although a fluid may be allowed to vent through the opening 78 of the outlet vent 72 during a steam-air fry operation, in an embodiment, the exposed portion of the opening 78 of the outlet vent 72 during a steam-air fry operation is less than the exposed portion of the opening 78 of the outlet vent 72 during a standard air fry operation.

In addition to sealing the cooking volume against an inflow of air from the inlet vent 70, other critical regions of the cooking system 20 are also sealed during a steam air frying mode of operation. Examples of such other critical regions that are sealed for proper operation in the steam air frying mode include, but are not limited to, the interface between any of the cooking container 50, the movable component 40 and the housing 32, as well as the opening where the motor shaft 94 extends through the divider 90. Further, optimization of the cooking system 20 to reduce or limit energy losses will also facilitate controlling or maintaining a humid environment within the cooking volume. For example, insulation may be strategically placed about a portion of the cooking system 20, such as within the housing 32, or near an external portion of the movable component 40 for example. Alternatively, or in addition, a cooling airflow over the outer surface of the cooking system 20 may be minimized or located remotely from a surface of the cooking container 50.

During a steam air fry operation, once a food item has been positioned within the cooking chamber 60 of the cooking container 50, the cooking volume is initially preheated to an elevated wet bulb temperature in excess of 70°C. This threshold is chosen such that once the air movement device 84 and heating element 80 are energized, the wet bulb temperature rapidly rises above 95°C and remains at this value for the duration of the cooking cycle. To achieve the desired wet-bulb temperature, the inlet and outlet vents 70, 72 are adjusted, and/or the heating element 82 is energized to heat a surface of the feature 120. Further, fluid from the fluid source 136 is slowly delivered to the heated feature 120, such as via gravity or a pump (not shown). As the fluid contacts the hot surface, steam is generated which flows into the cooking volume.

**In** an embodiment, upon reaching the desired wet-bulb temperature, for example as sensed by a temperature sensor in fluid communication with the cooking volume, the heating element 80 and the air movement device 84 are energized to increase the dry-bulb temperature to a desired temperature. However, embodiments where the heating element 80 is energized to achieve the desired dry-bulb temperature prior to energizing the heating element 82 to achieve the desired wet-bulb temperature, and embodiments where the heating elements 80, 82 are energized to achieve the desired wet-bulb temperature and dry-bulb temperature simultaneously are also within the scope of the disclosure. **In** an embodiment, the desired dry-bulb temperature is a temperature provided as an input by a user to the control panel. Such temperatures, which are the "cooking temperatures" as understood by the user, may range from about 38°C (100°F) to about 260°C (500°F) based on the food item that is being prepared. Operation of the heating element 80 and the air movement device 84 will cause the steam to circulate within the cooking volume in a manner similar to described above with respect to the standard air fry operation. It should be understood that the heating element 82 and the steam generation system 134 will continue to operate as necessary during operation of the heating element 80 and the air movement device 84 to maintain the wet-bulb temperature within the cooking volume.

By maintaining the cooking environment at the highest possible humidity during the steam air fry operation, evaporation of moisture from the surface of the food being cooked (dehydration) and the draw of food moisture from the interior of the food is minimized. Although a small amount of evaporation may occur, this is not enough to cool the surface of the food below the wet-bulb temperature. Accordingly, the result of such a cooking environment is a moister internal texture. As the steam entrained air circulates over the food being cooked, the condensation that forms on the exterior of the food transfers heat to the food, thereby cooking the food. By using steam to cook the food, the food is prevented from drying out during a cooking operation. Dry-bulb temperatures in excess of the Maillard browning and caramelization points result in high surface temperatures that crisp and/or brown of the exterior of a food item during a steam air fry operation. This crisping and/or browning is achieved once the surface of the food via dries sufficiently to exceed the wet-bulb temperature. Specifically, caramelization occurs for sucrose and glucose at 110°C and 160°C respectively. The higher the dry-bulb temperature, the more browning will occur since the Maillard temperatures (approximately 140°C) will be achieved at the surface of the food more quickly.

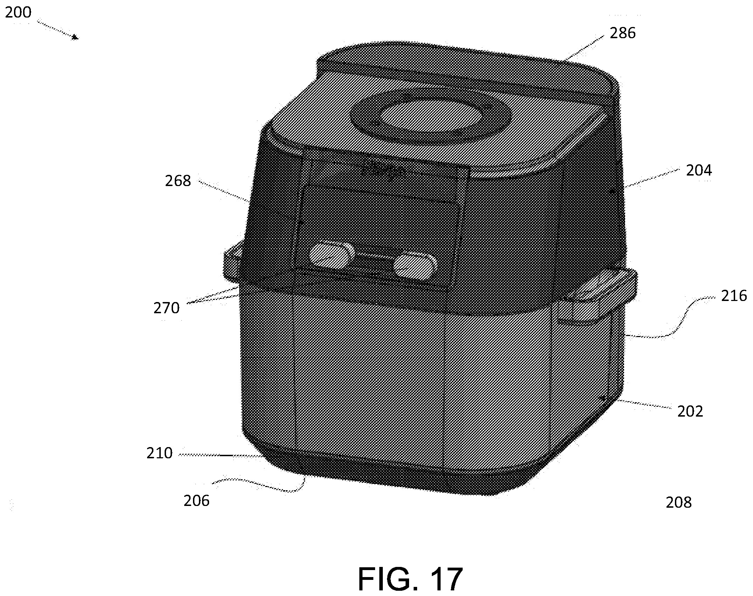

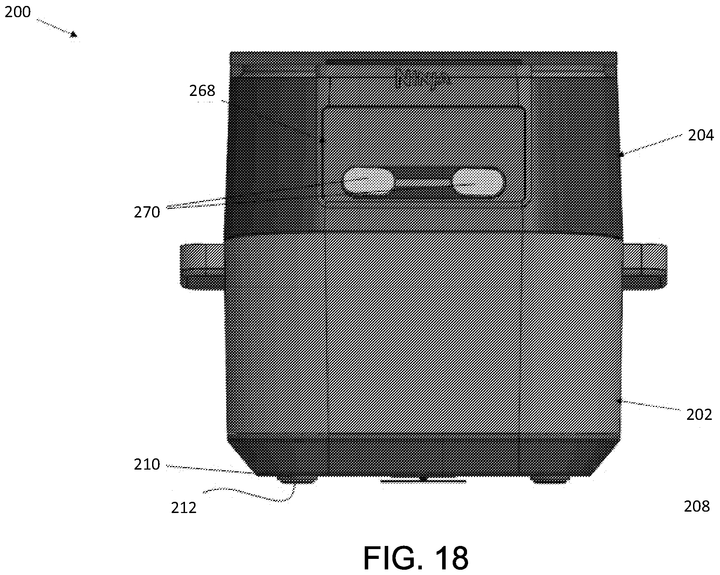

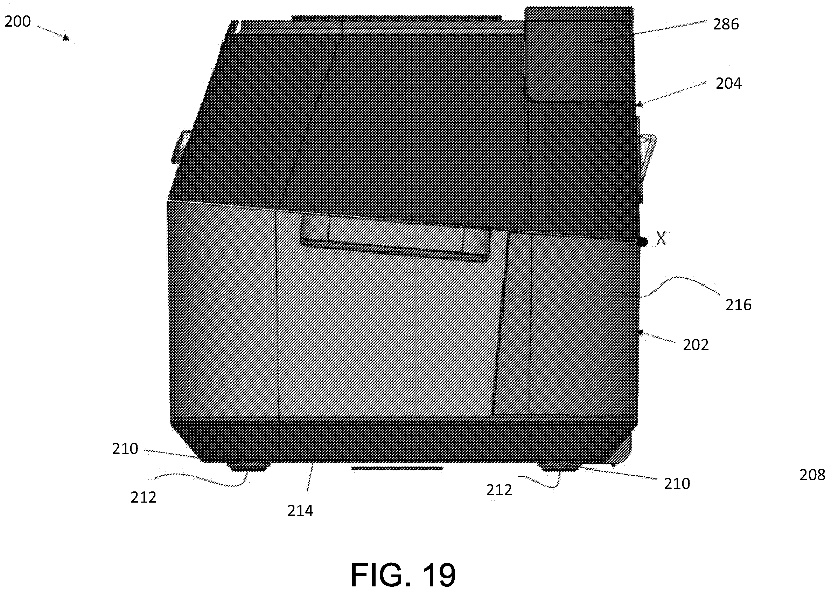

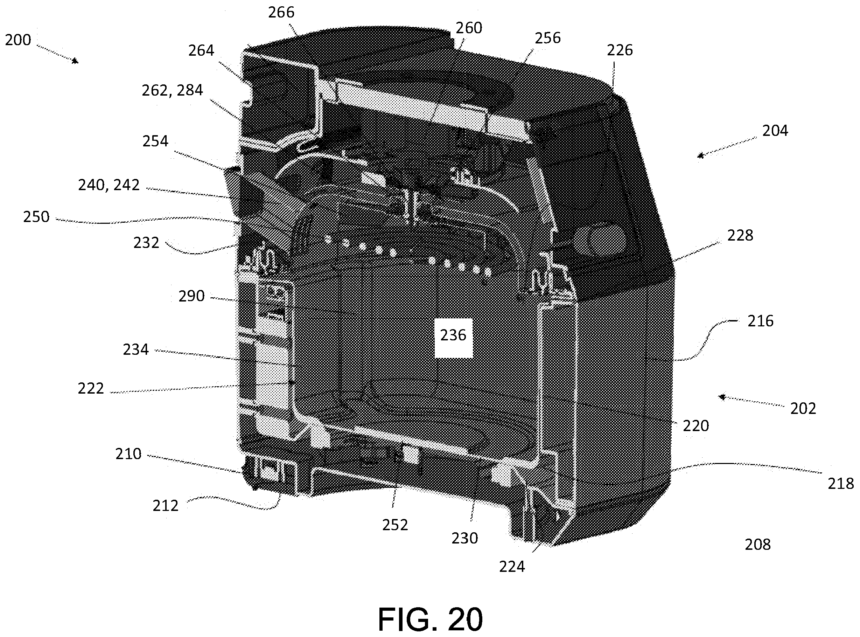

With reference to FIGS. 17-20, an example of a cooking system 200 configured to perform an air frying operation is illustrated. As shown, the cooking system 200 includes a base 202 and a lid 204 permanently or removably attached to the base 202. A bottom 206 of the base 202 of the cooking system 200 may be supported on a surface 208 by one or more feet 210. The at least one foot 210 may extend from the base 202 to define a surface 212 over which the cooking system 200 may contact an adjacent supporting surface 208, such as a countertop for example. The bottom surface 212 of the feet 210 may be flush with, or alternatively, may extend out of plane from the bottom 214 of the base 202. In the illustrated, non-limiting embodiment, the base 202 includes four feet 210 arranged adjacent a front and back of opposing sides of the base 202 (see FIGS. 19 and 20); however, it should be understood that a base 202 having a single foot, two feet, or any number of feet 210 is within the scope of the disclosure.

The base 202 includes a housing 216 made of any suitable material, such as glass, aluminum, plastic, or stainless steel for example. Referring now to some of the interior features of the cooking system 200, an inner surface of the housing 216 defines a hollow interior 218. A liner 220 formed from any suitable conductive material, such as aluminum for example, may be disposed within the hollow interior 218. In an embodiment, the liner 220 may form the inner surface of the housing 216 defining the hollow interior (though surfaces inside the liner 220 or outside the liner 220, such as plastic around the liner 220 for example, may also define the hollow interior 218).

In the illustrated, non-limiting embodiment of FIG. 20, the housing 216 of the base 202 has a closed or sealed first end 224, an open second end 226, and at least one sidewall, such as formed by the liner 220, extending between the first end 224 and the second end 226 to define the hollow interior 218. A food cooking container 222 may be receivable within the hollow interior 218 of the housing 216 via the second open end 226 arranged adjacent an upper surface 228 of the base 202. However, in other embodiments, as shown in FIGS. 17-19, the housing 216 may extend over only a portion of the base and/or may additionally include an opening formed at one or more sides of the housing 216. Accordingly, the food cooking container 222 may be inserted into the hollow interior 218 by translating the food cooking container 222 along a generally horizontal axis, such as through the opening, and into contact with the housing 216. **In** such embodiments, when the cooking container 222 is installed within the hollow interior 218, an exterior surface of the cooking container 222 may form a portion, such as one or more sides for example, of the housing 216. Although the cooking container 222 is illustrated and described herein as being removable from the base 202, embodiments where the cooking container 222 is integrally formed with the base 202 are also contemplated herein.

**In** an embodiment, the food cooking container 222 has a body including a first closed end 230, a second open end 232 and at least sidewall 234 extending between the first end 230 and the second end 232 to define a hollow interior or cooking chamber 236 therein. However, a cooking container 222 having another suitable configuration is also within the scope of the disclosure. The interior 236 of the cooking container 222 is designed to receive and retain one or more consumable products, such as food products for example, and the second end 232 of the cooking container 222 is generally open to provide access for positioning such food items therein. Examples of food products suitable for use with the cooking system 200, include but are not limited to, meats, fish, poultry, bread, rice, grains, pasta, vegetables, fruits, and dairy products, among others.

**In** an embodiment, the cooking chamber 236 of the cooking container 222 is at least 9 inches by 9 inches, such as 9.5 inches by 9.5 inches for example. Further, in an embodiment, the cooking chamber 236 of the cooking container 222 has a depth of at least 90 mm, such as 93 mm for example. **In** another embodiment, the cooking chamber 236 of the cooking container 222 has a depth of at least 95 mm, or at least 100 mm, such as 102 mm for example. However, it should be understood that a cooking container having nay suitable size and shape is within the scope of the disclosure.

The cooking container 222 may be formed from any suitable material, including but not limited to a ceramic, metal, or die cast aluminum material. In an embodiment, one or more interior surfaces 238 of the cooking container 222 includes a nano-ceramic coating and an exterior surface of the cooking container 222 includes a silicone epoxy material. However, any suitable material capable of withstanding the high temperatures and pressures required for cooking food products is contemplated herein.

One or more accessories may be compatible for use with the cooking system 200. Examples of such accessories include, but are not limited to, a diffuser and a crisping insert for example. In such embodiments, the accessories may be receivable within the interior 218 of the housing 216, or alternatively, within the interior 236 of the cooking container 222.

Referring now with more detail now to the lid 204, it should be noted that when the lid 204 is in a closed position, such as when the lid 204 is arranged in contact with the upper surface 228 of the base 202, the lid 204 seals the open end 232 of the cooking container 222 and/or the open end 226 of the housing 216. A cooking volume may be defined between the interior 236 of the food cooking container 222 and the closed lid 204. In an embodiment, a diameter of the lid 204 is generally complementary to a diameter of the base 202 such that the lid 204 covers not only the cooking container 222, but also an upper surface 228 of the base 202. The lid 204 can be made of any suitable material, such as glass, aluminum, plastic, or stainless steel for example.

In an embodiment, the lid 204 is coupled to the housing 216 via a hinge (not shown), such that the lid 204 is rotatable about an axis X between an open position and a closed position. In such embodiments, the hinge axis X may be located at any portion of the cooking system, such as a back side of the cooking system 200 as best shown in FIG. 19 for example. However, embodiments where the lid 204 is separable from the base 202, or movable between the open and closed positions in another manner are also contemplated herein. Further, embodiments where the lid 204 is permanently affixed to the base 202 in a closed position such that the open end 226 of the housing 216 is always sealed by the lid 204 are also contemplated herein.

In embodiments where the lid 204 is movable relative to the base 202, one or more fastening mechanisms (not shown) may, but need not be used to secure the lid 204 to the base 202 when the lid 204 is in the closed position. Any suitable type of fastening mechanism capable of withstanding the heat generated during operation of the cooking system 200 is considered within the scope of the disclosure.

The lid 204 may be capable of forming a pressure tight seal with the base 202 and/or cooking container 222. To prevent the pressure within the interior 218 or interior 236 from increasing during a cooking operation as a result of the increased temperature within the interior 218 or interior 236, the cooking system 200 include at least one vent arranged in fluid communication with the ambient atmosphere external to the cooking system. Although, the one or more vents are illustrated as being formed in a portion of the lid 204, it should be understood that a system having vents arranged in the base 202 or at any suitable location of the cooking system are within the scope of the disclosure.

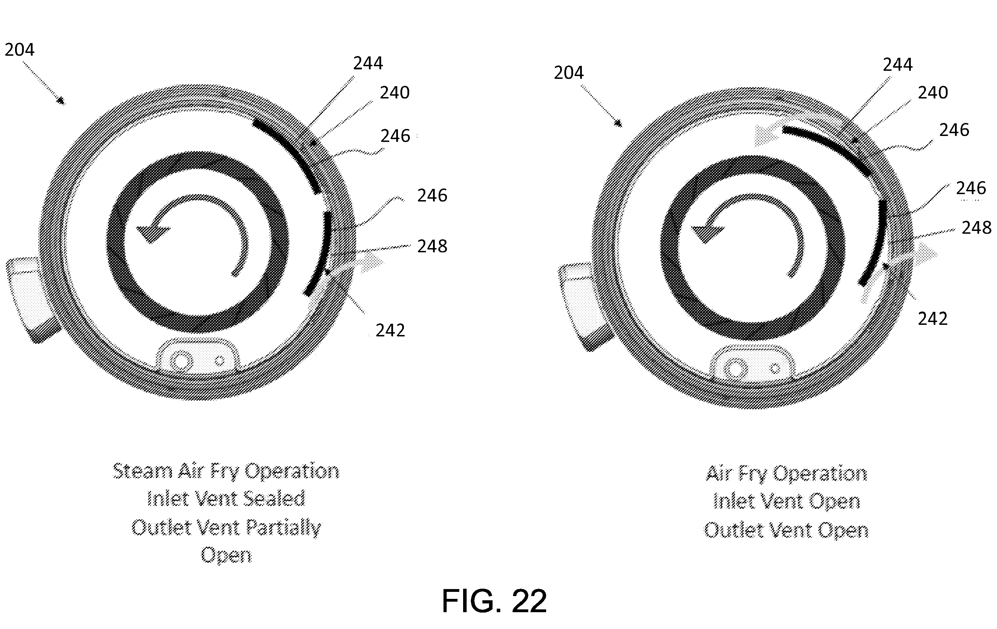

In the illustrated non-limiting embodiment, best shown in FIGS. 22A-22B, the cooking system 200 includes at least one inlet vent 240 through which a fluid is configured to flow into the cooking volume and at least one outlet vent 242 through which fluid is expelled from the cooking volume to outside of the cooking system 200. In an embodiment, an opening 244 of the at least one inlet vent 240 through which fluid, such as air for example, flows is adjustable to control the amount of air provided to the cooking volume. For example, the inlet vent 240 may include a flap, slats, or another mechanism 246 movable to control the size of the opening 244 of the inlet vent 240. However, any suitable configuration of the inlet vent 240 that allows the opening to be adjusted between an open position and a fully sealed position is within the scope of the disclosure. The outlet vent 242 may be a standard fixed vent, or alternatively, may similarly include a mechanism 246 movable to selectively control a flow of fluid through an opening 248 thereof.

**In** an embodiment, a flow through one or both of the inlet vent 240 and the outlet vent 242 is controlled in response to a selected cooking operation of the cooking system. For example, during a first cooking operation, such as a standard air frying operation, the inlet vent 240 may be partially or fully open, so that a fluid may flow through the opening 244 into the cooking volume. During a second cooking operation, such as a steam air frying cooking operation (to be described in more detail below), the opening 244 of the inlet vent 240 may be sealed or substantially sealed by mechanism 246 to block air from flowing into the cooking volume. Alternatively, adjustment of an allowable flow through the inlet vent 240 and/or the outlet vent 242 may be performed in response to feedback from one or more sensors S disposed within the cooking volume. Examples of parameters that may be monitored by the sensors S and used to control a position of the mechanisms 246 include but are not limited to a wet bulb temperature and a dry bulb temperature of the cooking system 200. As will be discussed in more detail below, fluid may be configured to flow through the outlet vent 242 during either the first or second cooking operation.

It should be understood that in an embodiment, the cooking system 200 may be able to perform a cooking operation where an increased pressure within the cooking volume is desirable, such as a pressure cooking operation for example. **In** such embodiments, a high pressure cooking environment may be achievable, with pressure levels reaching and/or exceeding 40kPa. Further, in such embodiments, one or both of the inlet and outlet vents 240, 242 may be generally closed to prevent fluid flow into and/or out of the cooking volume. However, the outlet vent 242 may be operable as a pressure relief valve to limit the pressure within the cooking volume from exceeding a predetermined threshold.

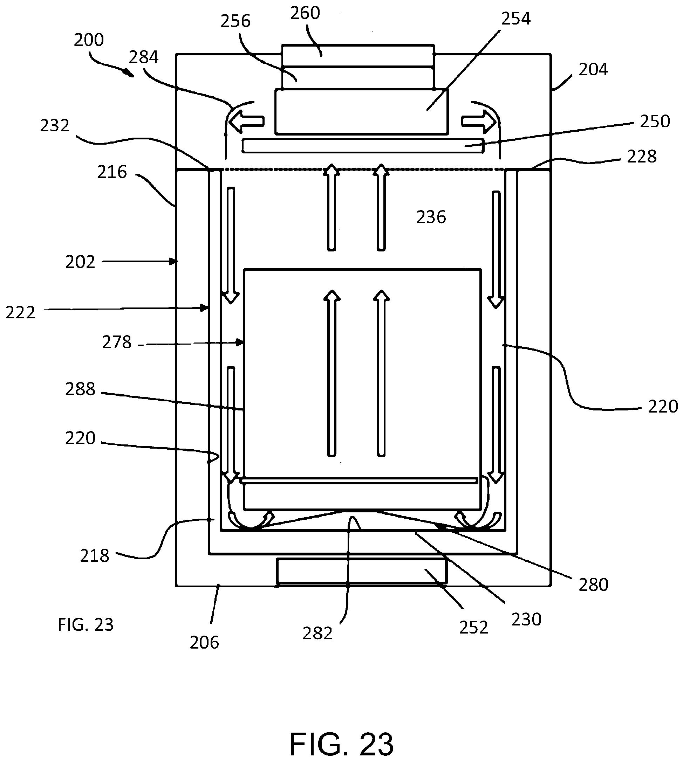

With reference now to FIGS. 20 and 23, the cooking system 200 includes at least one heating element operable to heat the cooking container 222 and/or the cooking volume during one or more modes of operation of the cooking system 200. As shown, a heating element 250 is positioned generally at or above the second end 232 of the cooking container 222, such as proximate a center of the interior 236 of the cooking container 222 for example. The at least one heating element 250 may be mounted within the lid 204, and therefore completely outside of the cooking container 222, and vertically offset from the second end 232 or upper extent thereof. Alternatively, or in addition, a heating element 252 may be disposed within the base 202, generally adjacent the first end 230 of the cooking container 222. However, it should be understood that embodiments where a heating element is arranged at another location within the base 202 and/or the lid 204 are also contemplated herein.

The at least one heating element 250, 252 may be capable of performing any suitable type of heat generation. For example, a heating element 250, 252 configured to heat the cooking container 222 or one or more food items located within the interior 236 of the cooking container 222 via conduction, convection, radiation, and induction are all within the scope of the disclosure. The heating element 250 may be used to heat the cooking container 222 or one or more food items therein via a "non-contact" cooking operation. As used herein, the term "non-contact cooking operation" includes any cooking operation where a heating element or heat source is not arranged in direct or indirect contact with a food item, such as, but not limited to, convective and radiant heating. In the illustrated, non-limiting embodiment, the heating element 250 is a convective heating element operable to cook food by heating an air flow provided to the cooking volume. In such embodiments, the cooking system 200 additionally includes an air movement device 254, such as a fan for example, operable to circulate air within the cooking volume. The air is heated as it flows along its path of circulation, such as by flowing over a portion of the at least one heating element 250. In the illustrated, non-limiting embodiment, the air movement device 254 is driven by a motor 256 having a separate cooling mechanism 260 coupled thereto.

With reference to FIG. 20, in an embodiment, a divider 262 arranged within the lid 204 defines a first portion or chamber including the heating element 250 and the air movement device 254, and a second portion or chamber, including the motor 256 and the cooling mechanism 260. In such embodiments, a sealing device, such as a gasket 264 for example, is positioned between a shaft 266 of the motor 256 and the divider 262 to minimize or eliminate friction of the motor shaft 266 as it rotates, while maintaining a pressure tight seal with the divider 262.

In an embodiment, the heating element 252 is operable to heat the cooking container 222 and/or one or more items disposed within the interior 236 of the cooking container 222 via a contact cooking operation. As used herein, the term "contact cooking operation" includes a cooking operation where heat is transmitted via direct or indirect contact, such as, but not limited to, conductive and inductive cooking. However, it should be understood that embodiments where the heating element 250 is operable to perform a contact cooking operation and embodiments where the heating element 252 is operable to perform a non-contact cooking operation are also within the scope of the disclosure. Further, in embodiments including heating element 250 and heating element 252, it should be understood that the heating elements may be operable independently or in combination to apply one or more predetermined power settings to cook the food products within the cooking container 222.

With reference again to FIGS. 17, 18, and 24, a control panel or user interface 268 of the cooking system 200 is positioned adjacent one or more sides of the housing 216 and/or lid 204. The control panel 268 includes one or more inputs 270 associated with energizing the one or more heating elements 250, 252 of the cooking system 200 by selecting and/or initiating a mode of operation of the cooking system 200. One or more of the inputs 270 may include a light or other indicator to indicate to a user that the respective input has been selected. The control panel 268 may additionally include a display 272 separate from or integral with the at least one input 270.

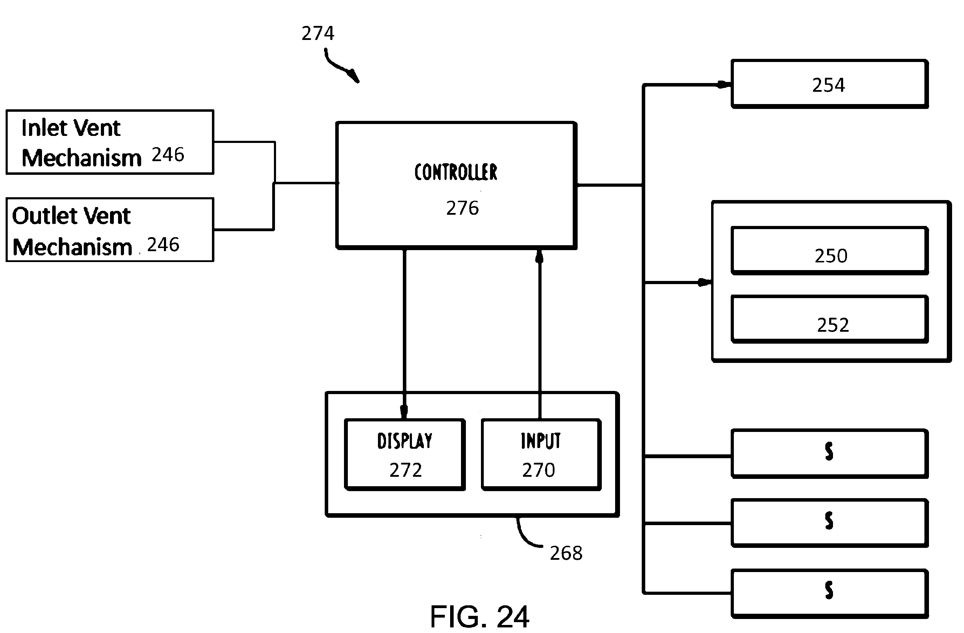

As shown in FIG. 24, a control system 274 of the cooking system 200 includes a controller or processor 276 for controlling operation of the heating elements 250, 252 and air movement device 254 (including the motor 256 and fan 68 associated therewith), which will be discussed in greater detail below), and in some embodiments for executing stored sequences of heating operation. The processor 276 is operably coupled to the control panel 268, to the heating elements 250, 252, to the air movement device 254, and to the mechanisms 246 for controlling a fluid flow through the inlet and outlet vents 240, 242. In addition, in an exemplary embodiment, one or more sensors S for monitoring one or more parameters (such as temperature, pressure, lid configuration, etc.) associated with operation of the heating elements 250, 252 may be arranged in communication with the processor 276. It should be understood that the sensors S may be the same, or alternatively, may be different than the sensors that provide feedback to control a fluid flow through the inlet vent 240 and/or outlet vent 242.

In some embodiments, the cooking system 200 may be configured to only perform an air frying operation; however, in other embodiments, the cooking system 200 may be capable of performing a plurality of cooking operations including an air frying operation. In such embodiments, the cooking operations include, but are not limited to standard air frying, steam air frying, steam cooking, and/or any combination thereof. To perform a cooking operation that includes a combination of multiple types of cooking modes, the food item need not be removed from the cooking container as the system transforms between a first mode, such as standard or steam air frying for example, and a second mode, such as steam cooking for example. As previously noted, the at least one input 270 may be used to select a mode or cooking operation of the cooking system 200.

During a standard air frying operation (first air fry mode), the heating element 250 and the air movement device 254 are used in combination to heat and circulate air through the cooking volume defined between the cooking container 222 and the lid 204. In such embodiments, an accessory, such as an insert 278 and/or an air diffuser 280 for example (see FIG. 23), may be disposed within the interior 236 of the cooking container 222, and the food to be cooked may be arranged within the insert. The insert 278 and diffuser 280 are optional system components that may benefit air circulation during an air frying cooking operation. The diffuser 280 is positionable anywhere in the hollow interior 236. In an exemplary, non-limiting embodiment, the diffuser 280 is positioned in contact with the bottom surface 282 of the cooking container 222 and is used in conjunction with the insert 278.

The controller 276 initiates operation of the heating element 250 and the air movement device 254 to circulate hot air represented by the arrows in FIG. 23 through the cooking volume. The air movement device 254 draws air from the center of the insert 278, within which the food may be located, across the heating element 250, and expels the hot air radially outwardly towards a guide 284 (which, in an exemplary embodiment, actually surrounds the fan 260). The guide 284 deflects the air downwardly along the sidewall 234 of the cooking container 222 towards a bottom surface 282 of the cooking container 222 (the arrows in FIG. 23 show exemplary air flow through the system). The air is then drawn up by the fan 260 at the center of the cooking container 222. In an embodiment, the divider 262 may be contoured to perform the functions of the guide 284. However, embodiments including a distinct divider 262 and guide 284 are also contemplated herein.

In embodiments where an insert 278 and/or diffuser 280 is arranged within the cooking container 222, the diffuser 280 may impart a rotational motion to the hot air, thereby creating a vortex as the air. Further, an end of the insert 278 adjacent the diffuser 280 may include a plurality of apertures such that the spinning air flows through the insert 278, over the food therein, before being drawn back up through the heating element 250 and into the fan 64 for further circulation. As the air circulates through the interior 236 of the cooking container 222 in the manner described above, the hot air cooks and forms a crispy outer layer on the food items disposed therein as a result of the Maillard effect.

In an embodiment, best shown in FIG. 22B, during operation in a standard air fry mode, hot air generated by operation of the air movement device 254 may be vented to the exterior of the cooking system 200 via the outlet vent 242. Similarly, fresh air may be drawn in through the opening 244 of the inlet vent 240 to ensure sufficient airflow within the cooking system 200. This intake and exhausting of air from the cooking volume in combination with the circulation of heated air therein achieves a dry cooking environment within the cooking container 222. Further, it should be noted that the heating element 252 is generally not energized during a standard air fry cooking operation.

During operation of the cooking system 200 in a steam air frying operation (second air fry mode), both the heating element 252 and the combination of the heating elements and air movement device 254 are used to heat the cooking volume to achieve a desirable wet-bulb temperature and dry-bulb temperature. As used herein, the term "dry-bulb temperature" is the temperature of the air within the cooking volume not affected by the moisture of the air. The term "wet-bulb temperature" as used herein is intended to describe the temperature of the air within the cooking volume while taking the moisture or humidity of the air into account. Accordingly, the difference between the dry-bulb temperature and the wet-bulb temperature depends in part on the moisture or humidity of the cooking environment. For dry bulb temperatures below the boiling point of water, when the air within the cooking volume is at 100% relative humidity (i.e. saturation), the wet-bulb temperature is equal to the dry-bulb temperature. However, once the dry-bulb temperature exceeds the boiling point of water (100°C), the dry-bulb temperature will exceed the maximum wet-bulb temperature, which is limited by the properties of water. Although the wet-bulb temperature cannot directly indicate the relative humidity within the cooking volume for temperatures above the boiling point of water, the wet-bulb temperature is still relevant to cooking since the surface temperature of food generally cannot exceed the boiling point of water due to evaporative cooling.

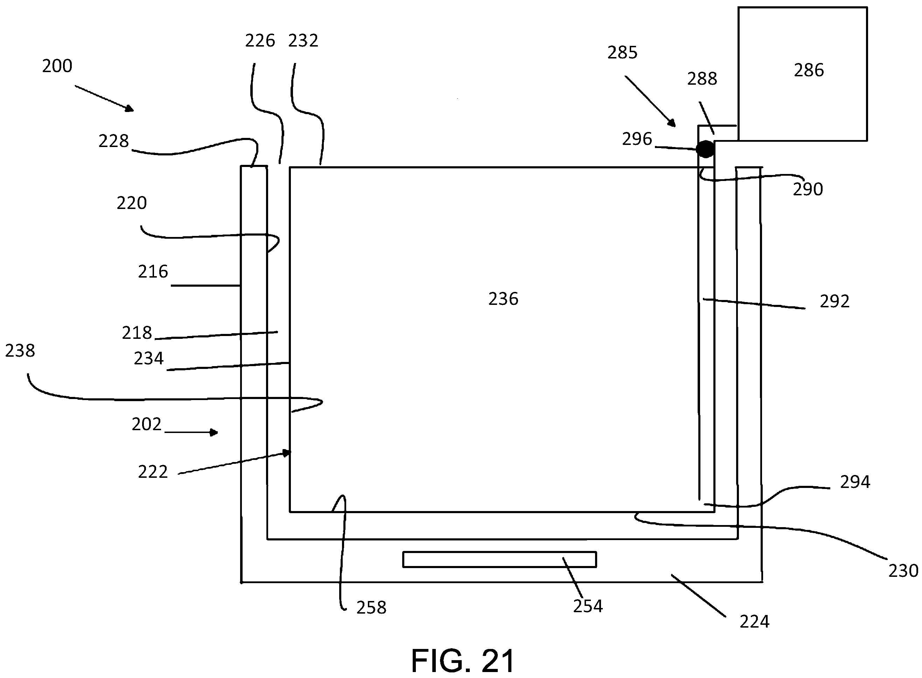

**In** a steam cooking operation, to achieve the desired wet-bulb temperature, the humidity within the cooking volume is controlled. **In** an embodiment, this humidity control is performed at least partially via the selective generation of steam within the cooking container 222. Steam may be generated within the cooking volume during the steam air fry cooking operation by delivering a fluid, such as water for example, to a hot or heated surface of the cooking system 200. **In** the illustrated, non-limiting embodiment of FIGS. 20 and 21, the heated surface of the cooking system 200 is the bottom interior surface 282 of the cooking container 222. However, it should be understood that any suitable surface of the cooking system, and more specifically of the cooking container 222 is contemplated herein. In an embodiment, the bottom interior surface 282 of the cooking container 222 is periodically or continuously heated by a heating element, for example a heating element 252 disposed directly adjacent the bottom 282 of the cooking container 222. However, in some embodiments, depending on the parameters of the cooking system 200, such as the distance between the heating element and the cooking container 222, the material of the cooking container 222 etc., a heating element located remotely from the cooking container 222 may be capable of sufficiently heating the surface of the cooking container 222 for steam generation.

With reference to FIGS. 20, 21 and 25, in an embodiment, the cooking system 200 includes a steam generation system 285 having fluid source 286 and a conduit 288 for delivering fluid from the fluid source 286 to a hot surface within the cooking volume. In an embodiment, the fluid source is a reservoir 286 configured to store a desired amount of fluid therein for use during a cooking operation. In such embodiments, the reservoir 286 may be permanently affixed or removably affixed to a portion of the cooking system, such as the lid 204. In embodiments where the reservoir 286 is removable, the reservoir 286 may be configured to move horizontally and/or vertically relative to the cooking system 200. The reservoir 286, may, but need not include a removable lid configured to selectively seal an open end of the reservoir 286. Further, in some embodiments, the reservoir 286 may include one or more markings to indicate to a user a sufficient amount of fluid required for a cooking operation based on the total volume of food within the cooking container 222. However, in other embodiments, the steam generation system 285 need not include a reservoir 286. Rather, the cooking system 200 may be connected to a fluid source 286 external to the cooking system 200, such as a faucet for example.

In an arrangement not claimed, best shown in FIG. 20, a portion of the cooking container 222 defines a flow path for delivering a fluid from the reservoir to a heated surface of the cooking container 222, such as the bottom surface 282 of the cooking container 222. An inlet 290 of the flow path is arranged in fluid communication with the conduit 288 extending from the reservoir 286, or alternatively, with an outlet of the reservoir directly, to provide a continuous flow path connecting the reservoir 286 to the cooking volume. In an arrangement not claimed, the flow path of the cooking container 222 is defined by a recessed region 292 formed in the cooking container 222.

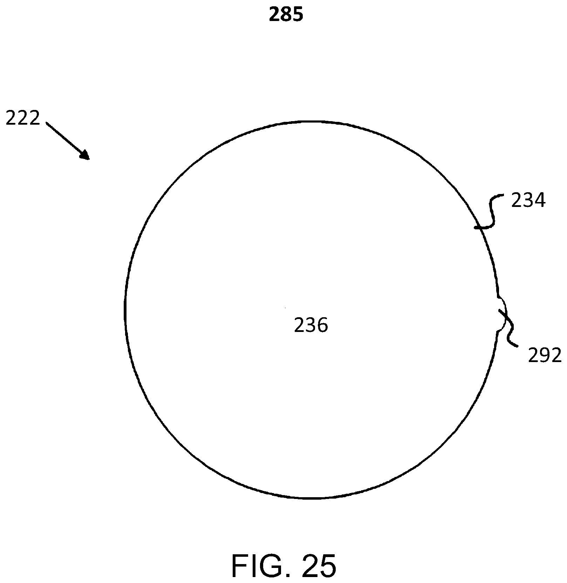

In the illustrated, non-limiting arrangement, not claimed, the recessed region or groove 292 is formed at a sidewall 234 of the cooking container 222, facing the interior 236 thereof (see FIGS. 20 and 25). The recessed region 292 may extend over a portion of the height of the cooking container 222, or alternatively, may extend over the entire height of the cooking container 222. Further, the contour of the recessed region 292 may be selected to discourage or prevent food within the cooking container 222 from protruding into the recessed region 292. In an arrangement not claimed, the recessed region 292 may include an outlet 294 located adjacent to the heated surface 258 of the cooking container 222 (see FIG. 21). However, in other arrangements not claimed, as shown in FIG. 20, a portion of the recessed region 292 may be formed in the surface of the cooking container 222 directly adjacent the heating element 252. By delivering the fluid directly to the heated surface, the likelihood of the fluid contacting the food positioned within the cooking volume before being converted into steam is greatly reduced.

In an embodiment, a flow control mechanism 296, such as a valve or other device suitable for controlling the fluid flow provided from the reservoir 286 to the cooking volume is disposed along the fluid flow path, such as upstream from recessed region 292 for example. This control mechanism 296 may be used to prevent the generation of excessive steam within the cooking volume, thereby reducing the energy requirements of the system 200. The flow control mechanism 296 may be operated to meter the fluid provided to the cooking container 222 based on predetermined rate or at a predetermined time interval associated with one or more parameters of a selected cooking operation. Alternatively, the flow control mechanism 296 may be adjusted in response to a signal generated by one or more sensors, for example disposed within the cooking volume. **In** such embodiments, the flow control mechanism 296 may control the flow of fluid provided to the cooking volume in response to one or more sensed parameters, such as the humidity within the cooking volume for example. Controlling the flow of fluid provided to the cooking container 222 prevents the accumulation of fluid at the bottom 282 of the cooking container 222, while limiting the impact on the dry-bulb temperature rise.

The humidity within the cooking volume is alternatively, or additionally controlled by sealing the cooking volume. Accordingly, during a steam air fry operation, in an embodiment, the mechanism 246 of the at least one inlet vent 240 is configured to seal the opening 244 of the inlet vent 240. However, the at least one outlet vent 242 is configured to allow the egress of steam, thereby preventing the buildup of pressure within the cooking volume. Although a fluid may be allowed to vent through the opening 248 of the outlet vent 242 during a steam-air fry operation, in an embodiment, the exposed portion of the opening 248 of the outlet vent 242 during a steam-air fry operation is less than the exposed portion of the opening 248 of the outlet vent 242 during a standard air fry operation.

**In** addition to sealing the cooking volume against an inflow of air from the inlet vent 240, other critical regions of the cooking system are also sealed. Examples of such other critical regions that are sealed for proper operation in the steam air frying mode include, but are not limited to, the interface between the cooking container 222 or base 202 and a surface of the lid 204, and the opening where the motor shaft extends into the interior of the lid 204. Further, optimization of the cooking system 200 to reduce or limit energy losses will also facilitate controlling or maintaining a humid environment within the cooking volume. For example, insulation may be strategically placed about a portion of the cooking system 200, such as near an outer surface of the lid 204 or within the housing 216 for example. Alternatively, or in addition, a cooling airflow over the outer surface of the cooking system 200 may be minimized or located remotely from a surface of the cooking container 222.

During a steam air fry operation, once a food item has been positioned within the interior 236 of the cooking container 222, the cooking volume may be initially preheated to an elevated wet bulb temperature in excess of 70°C. This threshold is chosen such that once the air movement device 254 and heating element 250 are energized, the wet bulb temperature rapidly rises above 95°C and remains at this value for the duration of the cooking cycle. To achieve the desired wet-bulb temperature, the inlet and outlet vents 240, 242 are adjusted, and/or the heating element 252 is energized to heat a surface of the cooking container 222. Further, fluid from the fluid source 286 is slowly delivered to the heated surface of the cooking container 222, thereby generating steam within the cooking volume.

In an embodiment, upon reaching the desired wet-bulb temperature, for example as sensed by a temperature sensor in fluid communication with the cooking volume, the heating element 250 and the air movement device 254 are energized to increase the dry-bulb temperature to a desired temperature. However, embodiments where the heating element 250 is energized to achieve the desired dry-bulb temperature prior to energizing the heating element 252 to achieve the desired wet-bulb temperature, and embodiments where the heating elements 250, 252 are energized to achieve the desired wet-bulb temperature and dry-bulb temperature simultaneously are also within the scope of the disclosure. In an embodiment, the desired dry-bulb temperature is a temperature provided as an input by a user to the control panel. Such temperatures, which are the "cooking temperatures" as understood by the user, may range from about 38°C (100°F) to about 260°C (500°F) based on the food item that is being prepared. Operation of the heating element 250 and the air movement device 254 will cause the steam to circulate within the cooking volume in a manner similar to described above with respect to the standard air fry operation. It should be understood that the heating element 252 and the steam generation system 285 will continue to operate as necessary during operation of the heating element 250 and the air movement device 254 to maintain the wet-bulb temperature within the cooking volume.

By maintaining the cooking environment at the highest possible humidity during the steam air fry operation, evaporation of moisture from the surface of the food being cooked (dehydration) and the draw of food moisture from the interior of the food is minimized. Although a small amount of evaporation may occur, this is not enough to cool the surface of the food below the wet-bulb temperature. Accordingly, the result of such a cooking environment is a moister internal texture. As the steam entrained air circulates over the food being cooked, the condensation that forms on the exterior of the food transfers heat to the food, thereby cooking the food. By using steam to cook the food, the food is prevented from drying out during a cooking operation. Dry-bulb temperatures in excess of the Maillard browning and caramelization points result in high surface temperatures that crisp and/or brown of the exterior of a food item during a steam air fry operation. This crisping and/or browning is achieved once the surface of the food via dries sufficiently to exceed the wet-bulb temperature. Specifically, caramelization occurs for sucrose and glucose at 110°C and 160°C respectively. The higher the dry-bulb temperature, the more browning will occur since the Maillard temperatures (approximately 140°C) will be achieved at the surface of the food more quickly.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Exemplary embodiments of this disclosure are described herein, including the best mode known to the inventors for carrying out the disclosure. Variations of those embodiments may become apparent to those of ordinary skill in the art upon reading the foregoing description. The inventors expect skilled artisans to employ such variations as appropriate, and the inventors intend for the disclosure to be practiced otherwise than as specifically described herein. Within the scope of the claims, any combination of the above-described elements in all possible variations thereof is encompassed by the disclosure unless otherwise indicated herein or otherwise clearly contradicted by context.
embodiment, the desired dry-bulb temperature is a temperature provided as an input by a user to the control panel. Such temperatures, which are the "cooking temperatures" as understood by the user, may range from about 100°F (°F) to about 500°F (°F) based on the food item that is being prepared. Operation of the heating element 250 and the air movement device 254 will cause the steam to circulate within the cooking volume in a manner similar to described above with respect to the standard air fry operation. It should be understood that the heating element 252 and the steam generation system 285 will continue to operate as necessary during operation of the heating element 250 and the air movement device 254 to maintain the wet-bulb temperature within the cooking volume.

By maintaining the cooking environment at the highest possible humidity during the steam air fry operation, evaporation of moisture from the surface of the food being cooked (dehydration) and the draw of food moisture from the interior of the food is minimized. Although a small amount of evaporation may occur, this is not enough to cool the surface of the food below the wet-bulb temperature. Accordingly, the result of such a cooking environment is a moister internal texture. As the steam entrained air circulates over the food being cooked, the condensation that forms on the exterior of the food transfers heat to the food, thereby cooking the food. By using steam to cook the food, the food is prevented from drying out during a cooking operation. Dry-bulb temperatures in excess of the Maillard browning and caramelization points result in high surface temperatures that crisp and/or brown of the exterior of a food item during a steam air fry operation. This crisping and/or browning is achieved once the surface of the food via dries sufficiently to exceed the wet-bulb temperature. Specifically, caramelization occurs for sucrose and glucose at 110°C and 160°C respectively. The higher the dry-bulb temperature, the more browning will occur since the Maillard temperatures (approximately 140°C) will be achieved at the surface of the food more quickly.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Exemplary embodiments of this disclosure are described herein, including the best mode known to the inventors for carrying out the disclosure. Variations of those embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A cooking system for cooking food, the cooking system comprising:
a housing (32) having a hollow interior (34);
a cooking container (50) receivable within said hollow interior (34), said cooking container (50) having an upper end (56);
a feature (120) proximate said upper end (56);
at least one heating element (82) operable to heat said feature (120); and
a fluid source (136, 286) arranged to deliver fluid to said feature (120);
**characterised in that**
said upper end (56) of said cooking container (50) has a radially outwardly extending flange (122), and said feature (120) includes a depression formed in said radially outwardly extending flange (122) to collect the fluid.

2. The cooking system of claim 1, including a lid (284), wherein said fluid source is a reservoir (286) removably mounted to said lid (284).

3. The cooking system of claim 1, wherein said at least one heating element (82) is mounted within said housing (32).

4. The cooking system of claim 3, wherein said housing (32) has a sidewall and said at least one heating element (82) is mounted within a cavity (126) formed in said sidewall.

5. The cooking system of claim 4, wherein when said cooking container (50) is arranged within said hollow interior (34), said feature (120) is arranged within said cavity (126) adjacent said at least one heating element (82).

6. The cooking system of claim 5, wherein a portion (124) of said feature (120) is arranged in direct contact with said at least one heating element (82).

7. The cooking system of claim 5, further comprising a biasing mechanism (128) operably coupled to said at least one heating element (82), wherein a biasing force of said biasing mechanism (128) biases said at least one heating element (82) into contact with said feature (120).

8. The cooking system of claim 1, wherein said at least one heating element (82) is mounted to said cooking container (50) adjacent said feature (120).

9. The cooking system of claim 8, wherein said at least one heating element (82) includes a first contact (130) and a second contact (132) is mounted within said housing (32), wherein said first contact (130) is operably coupled to said second contact (132) to deliver power to said at least one heating element (82) when said cooking container (50) is arranged within said hollow interior (34).

10. The cooking system of claim 1, wherein fluid is deliverable from said fluid source (136, 286) to said feature (120) at at least one of a predetermined time interval and a predetermined rate.

11. The cooking system of claim 10, including one or more sensors, wherein fluid is deliverable from said fluid source (136, 286) to said hollow interior (34) in response to a sensed parameter of the cooking system;
AND OPTIONALLY,
wherein said sensed parameter is a humidity within said hollow interior (34).

12. The cooking system of claim 1, wherein fluid is delivered to said feature (120) during operation of said at least one heating element (82).

13. The cooking system of claim 1, wherein said at least one heating element includes a first heating element (80) and a second heating element (82), wherein said first heating element (80) is operable to heat a flow of air circulating within said hollow interior (34) and said second heating element (82) is operable to heat said feature (120) of said cooking container (50).

14. The cooking system of claim 13, wherein said first heating element (80) is not energized when said fluid is delivered to said feature (120).

15. The cooking system of claim 1, further comprising a flow control mechanism (140) disposed within a fluid flow path (138) extending between said fluid source (136) and said feature (120), said flow control mechanism (140) being adjustable to control a flow of said fluid delivered to said feature (120) of the cooking system.

## Patentansprüche

1. Garsystem zum Garen von Lebensmitteln, wobei das Garsystem Folgendes umfasst:
ein Gehäuse (32) mit einem hohlen Innenraum (34);
einen Garbehälter (50), der innerhalb des hohlen Innenraums (34) aufnehmbar ist, wobei der Garbehälter (50) ein oberes Ende (56) aufweist;
ein Merkmal (120) in der Nähe des oberen Endes (56);
mindestens ein Heizelement (82), das dazu betreibbar ist, das Merkmal (120) zu erwärmen; und
eine Fluidquelle (136, 286), die dazu angeordnet ist, Fluid zu dem Merkmal (120) zuzuführen;
**dadurch gekennzeichnet, dass**
das obere Ende (56) des Garbehälters (50) einen sich radial nach außen erstreckenden Flansch (122) aufweist und das Merkmal (120) eine Vertiefung aufweist, die in dem sich radial nach außen erstreckenden Flansch (122) ausgebildet ist, um das Fluid aufzufangen.

2. Garsystem nach Anspruch 1, das einen Deckel (284) aufweist, wobei die Fluidquelle ein Reservoir (286) ist, das entfernbar an dem Deckel (284) montiert ist.

3. Garsystem nach Anspruch 1, wobei das mindestens eine Heizelement (82) innerhalb des Gehäuses (32) montiert ist.

4. Garsystem nach Anspruch 3, wobei das Gehäuse (32) eine Seitenwand aufweist und das mindestens eine Heizelement (82) innerhalb eines in der Seitenwand ausgebildeten Hohlraums (126) montiert ist.

5. Garsystem nach Anspruch 4, wobei, wenn der Garbehälter (50) innerhalb des hohlen Innenraums (34) angeordnet ist, das Merkmal (120) innerhalb des Hohlraums (126) angrenzend an das mindestens eine Heizelement (82) angeordnet ist.

6. Garsystem nach Anspruch 5, wobei ein Abschnitt (124) des Merkmals (120) in direktem Kontakt mit dem mindestens einen Heizelement (82) angeordnet ist.

7. Garsystem nach Anspruch 5, das ferner einen Vorspannmechanismus (128) umfasst, der mit dem mindestens einen Heizelement (82) wirkgekoppelt ist, wobei eine Vorspannkraft des Vorspannmechanismus (128) das mindestens eine Heizelement (82) in einen Kontakt mit dem Merkmal (120) vorspannt.

8. Garsystem nach Anspruch 1, wobei das mindestens eine Heizelement (82) angrenzend an das Merkmal (120) an dem Garbehälter (50) montiert ist.

9. Garsystem nach Anspruch 8, wobei das mindestens eine Heizelement (82) einen ersten Kontakt (130) aufweist und ein zweiter Kontakt (132) innerhalb des Gehäuses (32) montiert ist, wobei der erste Kontakt (130) mit dem zweiten Kontakt (132) wirkgekoppelt ist, um Leistung zu dem mindestens einen Heizelement (82) zuzuführen, wenn der Garbehälter (50) innerhalb des hohlen Innenraums (34) angeordnet ist.

10. Garsystem nach Anspruch 1, wobei Fluid aus der Fluidquelle (136, 286) in einem vorbestimmten Zeitintervall und/oder mit einer vorbestimmten Rate zu dem Merkmal (120) zuführbar ist.

11. Garsystem nach Anspruch 10, das einen oder mehrere Sensoren aufweist, wobei Fluid als Reaktion auf einen erfassten Parameter des Garsystems aus der Fluidquelle (136, 286) zu dem hohlen Innenraum (34) zuführbar ist; UND OPTIONAL,
wobei der erfasste Parameter eine Feuchtigkeit innerhalb des hohlen Innenraums (34) ist.

12. Garsystem nach Anspruch 1, wobei während eines Betriebs des mindestens einen Heizelements (82) Fluid zu dem Merkmal (120) zugeführt wird.

13. Garsystem nach Anspruch 1, wobei das mindestens eine Heizelement ein erstes Heizelement (80) und ein zweites Heizelement (82) aufweist, wobei das erste Heizelement (80) dazu betreibbar ist, einen Luftstrom zu erwärmen, der innerhalb des hohlen Innenraums (34) zirkuliert, und das zweite Heizelement (82) dazu betreibbar ist, das Merkmal (120) des Garbehälters (50) zu erwärmen.

14. Garsystem nach Anspruch 13, wobei das erste Heizelement (80) nicht mit Energie versorgt wird, wenn das Fluid zu dem Merkmal (120) zugeführt wird.

15. Garsystem nach Anspruch 1, das ferner einen Strömungssteuerungsmechanismus (140) umfasst, der innerhalb eines Fluidströmungswegs (138) angeordnet ist, der sich zwischen der Fluidquelle (136) und dem Merkmal (120) erstreckt, wobei der Strömungssteuerungsmechanismus (140) einstellbar ist, um eine Strömung des zu dem Merkmal (120) des Garsystems zugeführten Fluids zu steuern.

## Revendications

1. Système de cuisson pour cuire des aliments, le système de cuisson comprenant :
un boîtier (32) ayant un intérieur creux (34) ;
un récipient de cuisson (50) recevable au-dedans dudit intérieur creux (34), ledit récipient de cuisson (50) ayant une extrémité supérieure (56) ;
un dispositif (120) à proximité de ladite extrémité supérieure (56) ;
au moins un élément chauffant (82) utilisable pour chauffer ledit dispositif (120) ; et
une source de fluide (136, 286) agencée pour distribuer un fluide audit dispositif (120) ;
**caractérisé en ce que**
ladite extrémité supérieure (56) dudit récipient de cuisson (50) a un rebord s'étendant radialement vers l'extérieur (122), et ledit dispositif (120) inclut un creux formé dans ledit rebord s'étendant radialement vers l'extérieur (122) pour collecter le fluide.

2. Système de cuisson de la revendication 1, incluant un couvercle (284), dans lequel ladite source de fluide est un réservoir (286) monté sur ledit couvercle (284) de façon amovible.

3. Système de cuisson de la revendication 1, dans lequel ledit au moins un élément chauffant (82) est monté au-dedans dudit boîtier (32).

4. Système de cuisson de la revendication 3, dans lequel ledit boîtier (32) a une paroi latérale et ledit au moins un élément chauffant (82) est monté au-dedans d'une cavité (126) formée dans ladite paroi latérale.

5. Système de cuisson de la revendication 4, dans lequel, lorsque ledit récipient de cuisson (50) est agencé au-dedans dudit intérieur creux (34), ledit dispositif (120) est agencé au-dedans de ladite cavité (126) de façon adjacente audit au moins un élément chauffant (82).

6. Système de cuisson de la revendication 5, dans lequel une partie (124) dudit dispositif (120) est agencée en contact direct avec ledit au moins un élément chauffant (82).

7. Système de cuisson de la revendication 5, comprenant en outre un mécanisme de sollicitation (128) couplé de façon utilisable audit au moins un élément chauffant (82), dans lequel une force de sollicitation dudit mécanisme de sollicitation (128) sollicite ledit au moins un élément chauffant (82) en contact avec ledit dispositif (120).

8. Système de cuisson de la revendication 1, dans lequel ledit au moins un élément chauffant (82) est monté sur ledit récipient de cuisson (50) de façon adjacente audit dispositif (120).

9. Système de cuisson de la revendication 8, dans lequel ledit au moins un élément chauffant (82) inclut un premier contact (130) et un second contact (132) est monté au-dedans dudit boîtier (32), dans lequel ledit premier contact (130) est couplé de façon utilisable audit second contact (132) pour distribuer de l'énergie électrique audit au moins un élément chauffant (82) lorsque ledit récipient de cuisson (50) est agencé au-dedans dudit intérieur creux (34).

10. Système de cuisson de la revendication 1, dans lequel un fluide est distribuable depuis ladite source de fluide (136, 286) audit dispositif (120) à au moins un parmi un intervalle de temps prédéterminé et un débit prédéterminé.

11. Système de cuisson de la revendication 10, incluant un ou plusieurs capteurs, dans lequel un fluide est distribuable depuis ladite source de fluide (136, 286) audit intérieur creux (34) en réponse à un paramètre détecté du système de cuisson ;
et facultativement,
dans lequel ledit paramètre détecté est une humidité au-dedans dudit intérieur creux (34).

12. Système de cuisson de la revendication 1, dans lequel un fluide est distribué audit dispositif (120) durant un fonctionnement dudit au moins un élément chauffant (82).

13. Système de cuisson de la revendication 1, dans lequel ledit au moins un élément chauffant inclut un premier élément chauffant (80) et un second élément chauffant (82), dans lequel ledit premier élément chauffant (80) est utilisable pour chauffer un écoulement d'air circulant au-dedans dudit intérieur creux (34) et ledit second élément chauffant (82) est utilisable pour chauffer ledit dispositif (120) dudit récipient de cuisson (50).

14. Système de cuisson de la revendication 13, dans lequel ledit premier élément chauffant (80) n'est pas mis sous tension lorsque ledit fluide est distribué audit dispositif (120).

15. Système de cuisson de la revendication 1, comprenant en outre un mécanisme de commande d'écoulement (140) disposé au-dedans d'un chemin d'écoulement de fluide (138) s'étendant entre ladite source de fluide (136) et ledit dispositif (120), ledit mécanisme de commande d'écoulement (140) étant ajustable pour commander un écoulement dudit fluide distribué audit dispositif (120) du système de cuisson.
